(19) Europäisches Patentamt
European Patent Office
Office européen des brevets

(11) **EP 4 603 353 A2**

(12) **EUROPEAN PATENT APPLICATION**

(43) Date of publication:
**20.08.2025 Bulletin 2025/34**

(21) Application number: **25186041.7**

(22) Date of filing: **27.06.2025**

(51) International Patent Classification (IPC):
**B60W 30/095** *(2012.01)*    **B60W 50/00** *(2006.01)*
**B60W 60/00** *(2020.01)*

(52) Cooperative Patent Classification (CPC):
**B60W 30/095; B60W 50/0097; B60W 60/0027;**
B60W 2554/4041; B60W 2554/4042;
B60W 2554/4043; B60W 2556/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 CN 202410865869**

(71) Applicant: **Beijing Horizon Robotics Technology
Research and
Development Co., Ltd.
Beijing 100094 (CN)**

(72) Inventors:
• **PEI, Xizhe**
  **Beijing, 100094 (CN)**
• **QI, Lianjun**
  **Beijing, 100094 (CN)**
• **ZENG, Luyao**
  **Beijing, 100094 (CN)**
• **HE, Zhanli**
  **Beijing, 100094 (CN)**

(74) Representative: **Patentanwälte Magenbauer &
Kollegen
Partnerschaft mbB
Plochinger Straße 109
73730 Esslingen (DE)**

(54) **METHOD AND APPARATUS FOR CONTROLLING VEHICLE, MEDIUM, AND DEVICE**

(57)    A method for controlling a vehicle, comprising: determining first ego vehicle state information of the vehicle at a current time point and first obstacle state information of an obstacle around the vehicle at the current time point; determining, based on the first ego vehicle state information, first position probability distribution information of the vehicle at a future time point; determining, based on the first obstacle state information, second position probability distribution information of the obstacle at the future time point; determining, based on the first position probability distribution information and the second position probability distribution information, collision indication vector distribution information between the obstacle and the vehicle at the future time point; determining, based on the collision indication vector distribution information, a collision risk state between the vehicle and the obstacle; and controlling a driving state of the vehicle based on the collision risk state.

**FIG. 1**

**Description**

**FIELD OF THE INVENTION**

This disclosure relates to intelligent driving technology, and in particular, to a method and apparatus for controlling a vehicle, a medium, and a device.

**BACKGROUND OF THE INVENTION**

In field of intelligent driving, an automatic emergency braking (AEB for short) function is an active safety control function in vehicles designed to automatically intervene when the driver brakes too late, applies insufficient braking force, or fails to brake entirely, thereby avoiding or mitigating collisions. The AEB function requires real-time prediction of the trajectories of both the ego vehicle and obstacles over a specific period to determine collision risks and decide whether to activate emergency braking. The accuracy of trajectory prediction directly impacts whether emergency braking is activated, thereby affecting the occurrence of traffic accidents. Therefore, trajectory prediction demands high precision and high timeliness, necessitating rapid trajectory prediction to enable swift collision risk assessment. In existing technologies, collision risk is typically determined by calculating the interference conditions between the ego vehicle and obstacles using constant velocity or constant acceleration motion models based on their current states. However, these interference conditions are often represented as Boolean variables. And the data used for trajectory calculations for the ego vehicle and obstacles are acquired from the sensors and there is easily a noise in the sensor-acquired data, which compromises the accuracy of collision risk assessments.

**SUMMARY OF THE INVENTION**

Embodiments of this disclosure provide a method and apparatus for controlling a vehicle, a medium, and a device, capable of improving accuracy of a collision risk evaluation result, thereby improving driving safety of the vehicle.
Embodiments of a first aspect of this disclosure provide a method for controlling a vehicle, including:

determining first ego vehicle state information of the vehicle at a current time point and first obstacle state information of an obstacle around the vehicle at the current time point;
determining, based on the first ego vehicle state information, first position probability distribution information of the vehicle at a future time point;
determining, based on the first obstacle state information, second position probability distribution information of the obstacle at the future time point;
determining, based on the first position probability distribution information and the second position probability distribution information, collision indication vector distribution information between the obstacle and the vehicle at the future time point;
determining, based on the collision indication vector distribution information, a collision risk state between the vehicle and the obstacle; and
controlling a driving state of the vehicle based on the collision risk state.

Embodiments of a second aspect of this disclosure provide an apparatus for controlling a vehicle, including:

a first processing module, configured to determine first ego vehicle state information of the vehicle at a current time point and first obstacle state information of an obstacle around the vehicle at the current time point;
a second processing module, configured to determine, based on the first ego vehicle state information, first position probability distribution information of the vehicle corresponding to a future time point;
a third processing module, configured to determine, based on the first obstacle state information, second position probability distribution information of the obstacle at the future time point;
a fourth processing module, configured to determine, based on the first position probability distribution information and the second position probability distribution information, collision indication vector distribution information between the obstacle and the vehicle at the future time point;
a fifth processing module, configured to determine, based on the collision indication vector distribution information, a collision risk state between the vehicle and the obstacle; and
a sixth processing module, configured to control a driving state of the vehicle based on the collision risk state.

Embodiments of a third aspect of this disclosure provides a computer readable storage medium. The storage medium stores a computer program. The computer program is configured for implementing the method for controlling a vehicle according to any one of embodiments of this disclosure.

Embodiments of a fourth aspect of this disclosure provides an electronic device. The electronic device includes: a processor; and a memory configured to store processor-executable instructions. The processor is configured to read the executable instructions from the memory, and execute the instructions to implement the method for controlling a vehicle according to any one of embodiments of this disclosure.

Embodiments of a fifth aspect of this disclosure provides a computer program product. When instructions in the computer program product are executed by a processor, the method for controlling a vehicle according to any one of embodiments of this disclosure is implemented.

Based on a method and apparatus for controlling a vehicle, a medium, and a device according to embodiments of this disclosure, after the first obstacle state information of an obstacle around the vehicle and the first ego vehicle state information of the vehicle at a current time point have been determined, the first position probability distribution information of the vehicle at the future time point may be determined based on the first ego vehicle state information; the second position probability distribution information of the obstacle at the future time point may be determined based on the first obstacle state information; then, the collision indication vector distribution information between the obstacle and the vehicle at the future time point may be determined based on the first position probability distribution information and the second position probability distribution information; a collision risk state between the vehicle and the obstacle may be determined based on the collision indication vector distribution information, for controlling a driving state of the vehicle. As it is position probability distribution information between the ego vehicle and the obstacle at the future time point, rather than a Boolean variable to be predicted, this helps improve tolerance of a trajectory prediction result to a noise, and lower adverse impact brought by a sensor data noise, such that the collision indication vector distribution information is enabled to accurately describe the relation of spatial position distribution of the obstacle relative to the ego vehicle (i.e., the vehicle) at the future time point, thereby enabling to improve accuracy of the collision risk state, and improving driving safety of the vehicle.

## BRIEF DESCRIPTION OF THE DRAWINGS

FIG. 1 is an illustrative scenario of application of a method for controlling a vehicle according to this disclosure.
FIG. 2 is a flowchart of a method for controlling a vehicle according to an illustrative embodiment of this disclosure.
FIG. 3 is a flowchart of a method for controlling a vehicle according to another illustrative embodiment of this disclosure.
FIG. 4 is a flowchart of determining obstacle state information according to an illustrative embodiment of this disclosure.
FIG. 5 is a flowchart of a method for controlling a vehicle according to yet another illustrative embodiment of this disclosure.
FIG. 6 is a flowchart of a method for controlling a vehicle according to still another illustrative embodiment of this disclosure.
FIG. 7 is a flowchart of a method for controlling a vehicle according to yet another illustrative embodiment of this disclosure.
FIG. 8 is a flowchart of generating collision indication vector distribution information according to an illustrative embodiment of this disclosure.
FIG. 9 is a schematic diagram of collision indication vector distribution information of a plurality of future time points according to an illustrative embodiment of this disclosure.
FIG. 10 is a flowchart of a method for controlling a vehicle according to still another illustrative embodiment of this disclosure.
FIG. 11 is a flowchart of determining a current collision region according to an illustrative embodiment of this disclosure.
FIG. 12 is a schematic diagram of a vehicle-following and overtaking collision region according to an illustrative embodiment of this disclosure.
FIG. 13 is a schematic diagram of a vehicle-following collision region according to an illustrative embodiment of this disclosure.
FIG. 14 is a schematic diagram of a crossing and lateral deviating collision region according to an illustrative embodiment of this disclosure.
FIG. 15 is a schematic diagram of a crossing collision region according to an illustrative embodiment of this disclosure.
FIG. 16 is a schematic diagram of a left turn collision region according to an illustrative embodiment of this disclosure.
FIG. 17 is a schematic diagram of a right turn collision region according to an illustrative embodiment of this disclosure.
FIG. 18 is a flowchart of collision probability computation and collision risk issuing according to an illustrative embodiment of this disclosure.

FIG. 19 is a schematic diagram of a structure of an apparatus for controlling a vehicle according to an illustrative embodiment of this disclosure.

FIG. 20 is a schematic diagram of a structure of an apparatus for controlling a vehicle according to another illustrative embodiment of this disclosure.

FIG. 21 is a schematic diagram of a structure of an apparatus for controlling a vehicle according to yet another illustrative embodiment of this disclosure.

FIG. 22 is a schematic diagram of a structure of an electronic device according to embodiments of this disclosure.

**DETAILED DESCRIPTION OF THE EMBODIMENTS**

To explain this disclosure, illustrative embodiments of this disclosure are elaborated below with reference to accompanying drawings. Clearly, the embodiments described are merely some, rather than all, embodiments of this disclosure. It should be understood that this disclosure is not limited to the illustrative embodiments.

It should be noted that the scope of this disclosure is not limited to relative arrangements, numeric expressions, and numerical values of components and steps described in these embodiments, unless specified otherwise.

Disclosure overview

In implementing this disclosure, the inventor discovers that in related art, a case of interference between a driving trajectory of the ego vehicle and that of an obstacle is computed generally using a uniform or uniformly accelerated motion model based on current states of the ego vehicle and the obstacle, and then a risk of collision is determined according to the case of interference. That is, if there exist trajectory points having interference with each other between the driving trajectories of the ego vehicle and obstacle, it is determined that there is a risk of collision between the ego vehicle and the obstacle, and an AEB function is to be activated. It may be seen that the case of interference between the driving trajectory of the ego vehicle and that of the obstacle is expressed by a Boolean variable, the data used for trajectory calculations for the ego vehicle and obstacles are acquired from the sensors and there is easily a noise in the sensor-acquired data, easily causing an error in the predicted driving trajectory of the ego vehicle and that of the obstacle, which may lead to false trigger of the AEB function by error-caused occurrence of interference between the predicted driving trajectory of the ego vehicle and that of the obstacle, when there is indeed no interference, thereby impacting riding experience, or failure to trigger the AEB function due to error-caused lack of interference between the predicted driving trajectory of the ego vehicle and that of the obstacle, when there is indeed interference, thereby seriously impacting driving safety of the vehicle.

Illustrative overview

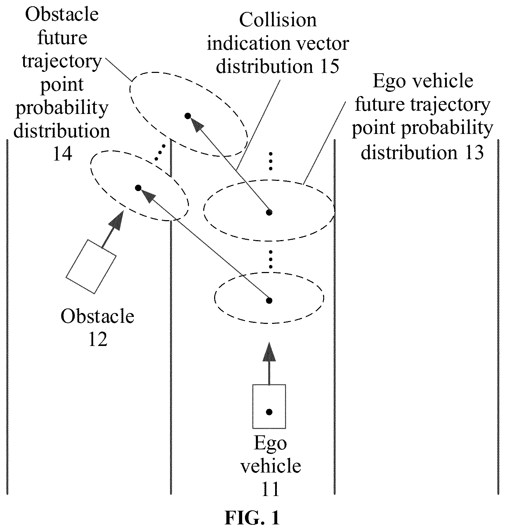

FIG. 1 is an illustrative scenario of application of a method for controlling a vehicle according to this disclosure. As shown in FIG. 1, while the vehicle (i.e., the ego vehicle) 11 drives, an environment and a state of the ego vehicle may be perceived using various sensors on the vehicle. Using the method for controlling a vehicle according to embodiments of this disclosure, first ego vehicle state information of the vehicle 11 at a current time point and first obstacle state information of an obstacle 12 around the vehicle at the current time point may be determined based on a result of perception; then, first position probability distribution information (the ego vehicle future trajectory point probability distribution 13 as shown in FIG. 1) of the vehicle 11 at at least one future time point may be determined based on the first ego vehicle state information; and second position probability distribution information (obstacle future trajectory point probability distribution 14 as shown in FIG. 1) of the obstacle 12 at the at least one future time point may be determined based on the first obstacle state information; then, collision indication vector distribution information (collision indication vector distribution 15 as shown in FIG. 1) of the obstacle 12 and the vehicle 11 at the at least one future time point may be determined based on the first position probability distribution information and the second position probability distribution information at the at least one future time point; a collision risk state of the vehicle 11 with the obstacle 12 may be determined based on the collision indication vector distribution information at the at least one future time point; and then, a driving state of the vehicle 11 may be controlled based on the collision risk state. It may be seen that collision indication vector distribution information between the obstacle 12 and the vehicle 11 at a future time point represents a relation of spatial position distribution of the obstacle 12 relative to the ego vehicle 11 at the future time point, and the collision indication vector distribution information is determined based on the predicted ego vehicle future trajectory point probability distribution 13 and the predicted obstacle future trajectory point probability distribution 14. As it is position probability distribution information between the ego vehicle 11 and the obstacle 12 at the future time point, rather than a Boolean variable to be predicted, this helps improve tolerance of a trajectory prediction result to a noise, and lower adverse impact brought by a sensor data noise, such that the collision indication vector distribution information is enabled to accurately describe the relation of spatial position distribution of the obstacle 12 relative to the ego vehicle 11 at the future time point, thereby enabling to improve accuracy of the collision risk state, and improving driving safety of the vehicle 11.

Illustrative method

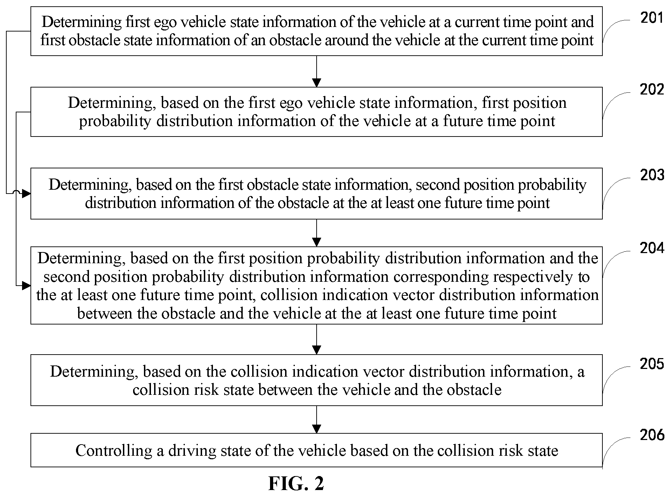

FIG. 2 is a flowchart of a method for controlling a vehicle according to an illustrative embodiment of this disclosure. This embodiment is applicable to an electronic device, specifically to for example an onboard computing platform. As shown in FIG. 2, the method according to embodiments of this disclosure may include steps as follows.
Step 201, Determining first ego vehicle state information of the vehicle at a current time point and first obstacle state information of an obstacle around the vehicle at the current time point.
The first ego vehicle state information of the vehicle at the current time point may include kinematic information of the vehicle at the current time point. The kinematic information of the ego vehicle may include a velocity, an acceleration, a yaw, a yaw rate, a position, etc. The first obstacle state information of the obstacle at the current time point may include kinematic information of the obstacle at the current time point and size information. The kinematic information of the obstacle may include a velocity, an acceleration, a yaw, a yaw rate, a position, etc., of the obstacle in a vehicle local coordinate system (such as a coordinate system of the ego vehicle at the current time point). The size information of the obstacle may include a length, a width, etc., of the obstacle.
In some optional embodiments, the first obstacle state information of the obstacle further may include a type of the obstacle. The type may include a vehicle, a pedestrian, a two-wheeler, another type, etc., and specifically may be set as needed.
In some optional embodiments, kinematic information may include motion trajectory sequences at the current time point and a historical time point, such as velocities, accelerations, yaws, yaw rates, positions, etc. corresponding to respective trajectory points of the vehicle at the current time point and the historical time point.
In some optional embodiments, the first ego vehicle state information may be state information of the vehicle in a global coordinate system. The global coordinate system may be for example a world coordinate system, a coordinate system of the ego vehicle at an initial position, etc., and specifically is not limited.
In some optional embodiments, the first ego vehicle state information and the first obstacle state information of the obstacle may be perceived. For example, the first ego vehicle state information may be determined based on data related to the ego vehicle acquired by the various sensors on the vehicle, and the first obstacle state information of the obstacle may be determined based on data related to the environment acquired by various environment-perceiving sensors on the vehicle.
In some optional embodiments, the first the ego vehicle state information and the first obstacle state information of the obstacle may be preprocessed state information. A mode of preprocessing may include for example at least one of data cleaning, noise reduction processing, completeness check, etc., to improve accuracy, effectiveness, completeness, etc., of the state information.
In some optional embodiments, there may be one or more obstacles. A collision risk state of each obstacle with the vehicle may be determined according to the method according to embodiments of this disclosure.
Step 202, Determining, based on the first ego vehicle state information, first position probability distribution information of the vehicle at a future time point.
A future time point may include at least one future time point. The at least one future time point may include one or a plurality of future time points, and may be determined using a preset prediction time window and a frame interval (each time point corresponding to one frame). For example, in the case that the prediction time window is of 3 seconds, with 20 frames per second, 60 future time points may be determined per a prediction time window.
In some optional embodiments, the first position probability distribution information may include a position mean and variance. A probability of distribution of a position of the vehicle at any one future time point may be determined based on a position mean and variance corresponding to the future time point. For example, probabilities of the vehicle being located at respective positions within an elliptical region (see FIG. 1) at the any one future time point may be determined based on the position mean and the variance.
In some optional embodiments, the first position probability distribution information of the vehicle at the at least one future time point may be predicted based on any mode of prediction that can be implemented. For example, the first position probability distribution information of the vehicle at the at least one future time point may be predicted based on a neural network prediction model, the first position probability distribution information of the vehicle at the at least one future time point may be predicted based on traceless transformation and a state transition equation (also referred to as a state transition function or a state transition rule) of the vehicle, etc.
Step 203, Determining, based on the first obstacle state information, second position probability distribution information of the obstacle at the at least one future time point.
The second position probability distribution information may include a position mean and variance. A probability of distribution of a position of the obstacle at any one future time point may be determined based on a position mean and variance corresponding to the future time point. A specific mode of determining the second position probability distribution information of the obstacle at the at least one future time point may be similar to that of determining the first position probability distribution information of the vehicle in step 202, which is not repeated here.

It should be noted that step 202 and step 203 may be in no particular order.

Step 204, Determining, based on the first position probability distribution information and the second position probability distribution information corresponding respectively to the at least one future time point, collision indication vector distribution information between the obstacle and the vehicle at the at least one future time point.

A collision indication vector may refer to a vector pointing from a position of ego vehicle (such as a geometric center point or a rear axle center of the ego vehicle) toward a position of the obstacle (such as a geometric center point of the obstacle). The collision indication vector represents the position of the obstacle relative to the ego vehicle. As a predicted position of the ego vehicle and a predicted position of the obstacle at a future time point follow a probability distribution, the position of the obstacle relative to the ego vehicle is distributed with certain probabilities. Then, the collision indication vector distribution information indicates information on distribution of the collision indication vector. That is, collision indication vector distribution information corresponding to a future time point may refer to information on distribution of vectors pointing from first position probability distribution information corresponding to the future time point toward second position probability distribution information corresponding to the future time point. That is, the collision indication vector distribution information represents the relation of spatial position distribution of the obstacle relative to the vehicle at the future time point. The collision indication vector distribution information may include an mean and a variance of the collision indication vector, i.e., following a certain probability distribution, such as following a normal distribution (i.e., Gaussian distribution). The mean and the variance of the collision indication vector are obtained by superposing the first position probability distribution information and the second position probability distribution information. A mode of superposition meets a rule of superposing Gaussian distributions.

Step 205, Determining, based on the collision indication vector distribution information, a collision risk state between the vehicle and the obstacle

The collision risk state may include a risky state and a risk-free state. As the collision indication vector distribution information corresponding respectively to the at least one future time point represents the relation of spatial position distribution of the obstacle relative to the ego vehicle at the at least one future time point, and the relation of spatial position distribution may include probabilities of distribution of the obstacle at different positions relative to the ego vehicle, a risk probability of collision of the vehicle with the obstacle at the at least one future time point may be computed based on the collision indication vector distribution information at the at least one future time point, and the collision risk state between the vehicle and the obstacle may be determined based on the risk probability of collision.

In some optional embodiments, for a future time point, the collision risk state may be determined according to a case of integration, within a certain region around the vehicle, of collision indication vector distribution information corresponding to the future time point.

Step 206, Controlling a driving state of the vehicle based on the collision risk state.

If the collision risk state is risky, the AEB function may be triggered, and the driving state of the vehicle may be controlled according to the AEB function. If the collision risk state is risk-free, the AEB function does not have to be triggered, and control of the driving state of the vehicle according to a current mode of control may continue, where specific modes of vehicle control thereof are not elaborated one by one.

With the method for controlling a vehicle according to this embodiment, as it is position probability distribution information between ego vehicle and the obstacle at the future time point to be predicted, rather than a Boolean variable, this helps improve tolerance of a trajectory prediction result to a noise, and lower adverse impact brought by a sensor data noise, and then the collision indication vector distribution information between the obstacle and ego vehicle is determined based on the position probability distribution information (i.e., the first position probability distribution information) of the ego vehicle and the position probability distribution information (i.e., the second position probability distribution information) of the obstacle, the collision indication vector distribution information still is probability distribution information, such that the collision indication vector distribution information is enabled to accurately describe the relation of spatial position distribution of the obstacle relative to the ego vehicle (i.e., the vehicle) at the future time point, thereby enabling to improve accuracy of the collision risk state, and improving driving safety of the vehicle.

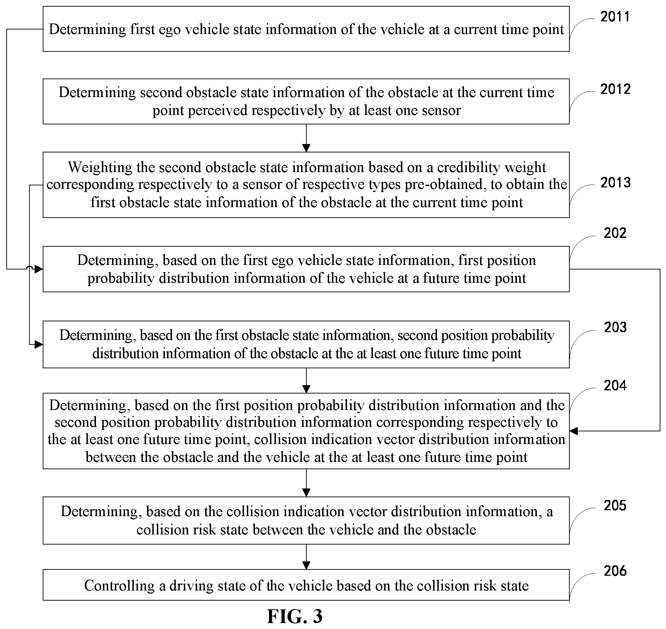

FIG. 3 is a flowchart of a method for controlling a vehicle according to another illustrative embodiment of this disclosure.

In some optional embodiments, based on the embodiment shown in FIG. 2, as shown in FIG. 3, step 201 of determining first ego vehicle state information of the vehicle at a current time point and first obstacle state information between an obstacle around the vehicle at the current time point may include steps as follows.

Step 2011, Determining first ego vehicle state information of the vehicle at a current time point.

For the first ego vehicle state information and a mode of determining the information, one may refer to a foregoing embodiment.

Step 2012, Determining second obstacle state information of the obstacle at the current time point perceived respectively by at least one sensor.

The at least one sensor may be of one or a plurality of sensor types. For example, the at least one sensor may include at least one of: a camera (also referred to as a cam), light detection and ranging (LIDAR), millimeter-wave radio detection and ranging (radar), ultrasonic radar, etc. Second obstacle state information perceived by sensors of respective types may be state information in the same coordinate system, such as the obstacle state information transformed to the vehicle local coordinate system. State types of second obstacle state information of the obstacle perceived by sensors of different types may be the same or different, depending on specific perceiving functions of the sensors of the different types and perception needs of a user for the sensors of the different types. A state type of the obstacle may include the position, the velocity, the acceleration, a size, an angle, an angular velocity, a distance, etc., of the obstacle. Each state type, or some state types, of the obstacle may be perceived by one type of sensors. For example, the position, the velocity, and the acceleration of the obstacle may be perceived using image data acquired by the camera. A three-dimensional coordinate, the size, the distance, etc., of the obstacle may be perceived using three-dimensional point cloud data acquired by the LIDAR. The distance, the velocity, the angle, etc., of the obstacle may be perceived using pulse data sent and echo data acquired by the millimeter-wave radar.

In some optional embodiments, to improve accuracy and reliability of the obstacle state information, second obstacle state information of the obstacle at the current time point perceived respectively by at least two sensors may be determined, for determining the first obstacle state information of the obstacle.

Step 2013, Weighting the second obstacle state information based on a credibility weight corresponding respectively to a sensor of respective types pre-obtained, to obtain the first obstacle state information of the obstacle at the current time point.

The credibility weight corresponding respectively to the sensor of the respective types represents a degree of confidence of obstacle state information perceived by the sensor of the respective types. Respective second obstacle state information is weighted based on the credibility weight corresponding respectively to the sensor of the respective types, thereby enabling to raise a role of second obstacle state information of high confidence in a multi-sensor fusion process, and lower a role of second obstacle state information of low confidence. The credibility weight corresponding respectively to the sensor of the respective types may be calibrated in advance.

In some optional embodiments, among the respective state type of the second obstacle state information perceived by the sensor of the respective types, state information of one state type perceived by sensors of respective types may be weighted by credibility weights. For example, the position of the obstacle is perceived by sensors of a plurality of types. Then, a plurality of positions perceived are weighted by credibility weights, as the position in the first obstacle state information. State information perceived by sensors of just one type may directly be set as state information in the first obstacle state information. For example, the acceleration of the obstacle is perceived by just the camera. Then, the acceleration is set as the acceleration in the first obstacle state information of the obstacle.

With this embodiment, as the first obstacle state information of the obstacle may be determined by combining obstacle state information perceived by sensors of at least one type, which, in case of a plurality of types of sensors, enables to improve accuracy and reliability of the first obstacle state information on one hand, and on the other hand, in case a sensor of any one type malfunctions and fails to perceive the obstacle, enables to effectively perceive the obstacle using a sensor of another type, implementing evaluation of the collision risk state, thereby improving a rate of successfully perceiving the obstacle, and improving driving safety of the vehicle.

In some optional embodiments, the credibility weight corresponding respectively to the sensor of the respective types is obtained by:

determining an obstacle state ground truth of a preset obstacle and an obstacle state predicted value of the preset obstacle perceived respectively by the sensor of the respective types; and determining the credibility weight corresponding respectively to the sensor of the respective types based on the obstacle state ground truth and the obstacle state predicted value corresponding respectively to the sensor of the respective types.

The preset obstacle may be a specified obstacle within a range visible to a sensor of respective types around the vehicle. For example, the preset obstacle may be a preset vehicle. The vehicle may be placed in advance to drive on a road in a preset scenario, and the preset obstacle may be controlled in the preset scenario to drive within the range visible to the sensor of the vehicle, to obtain the obstacle state ground truth and the obstacle state predicted value perceived by the sensor of the respective types. For example, a size of the preset obstacle may be determined according to an actual case of the preset obstacle, and a position, a velocity, an acceleration, etc., of the preset obstacle in the global coordinate system may be obtained using a sensor (which may include for example a positioning sensor, a vehicle speed sensor, an angular velocity sensor, etc.,) on the preset obstacle. Alternatively, the preset obstacle is controlled to drive according to preset kinematic information in the global coordinate system, thereby enabling to transform the preset kinematic information to the vehicle local coordinate system, to obtain the obstacle state ground truth. The obstacle state ground truth may be a state ground truth of the preset obstacle relative to the ego vehicle. A mode of obtaining the obstacle state ground truth is not limited.

In some optional embodiments, the preset obstacle may be perceived respectively using the sensor of the respective types, to obtain the obstacle state predicted value of the preset obstacle perceived respectively by the sensor of the respective types. The obstacle state predicted value and the obstacle state ground truth are synchronized. The credibility weight corresponding respectively to the sensor of the respective types is determined according to a respective error in the obstacle state predicted value perceived by the sensor of the respective types with respect to the obstacle state ground truth.

Illustratively, sensors of at least one type includes a camera, LIDAR, and millimeter-wave radar. A credibility weight of the camera is expressed by $w_1$, a credibility weight of the LIDAR is expressed by $w_2$, a credibility weight of the millimeter-wave radar is expressed by $w_3$, the obstacle state ground truth of the preset obstacle is expressed by $P_0$, an obstacle state predicted value perceived by the camera is expressed by $P_1$, an obstacle state predicted value perceived by the LIDAR is expressed by $P_2$, and an obstacle state predicted value perceived by the millimeter-wave radar is expressed by $P_3$. Then, the credibility weight $w_i(i=1, 2, 3)$ of each type of sensors may be expressed as follows.

$$w_i = \frac{\dfrac{P_i - P_0}{P_0}}{\dfrac{P_1 - P_0}{P_0} + \dfrac{P_2 - P_0}{P_0} + \dfrac{P_3 - P_0}{P_0}} \cdot 100\%$$

Then, in an actual application process of the vehicle, the first obstacle state information of the obstacle may be expressed as follows.

$$P = \sum_{i=1}^{3} w_i \cdot P'_i$$

Wherein $P'_i$ expresses second obstacle state information perceived by a sensor of an i-th type.

In some optional embodiments, the obstacle state ground truth may include at least one state ground truth corresponding respectively to the at least one time point, and accordingly an obstacle state predicted value corresponding to one type of sensors may include at least one state predicted value corresponding respectively to the at least one time point. Then, the credibility weight corresponding respectively to the sensor of the respective types may be determined by combining respective errors in state predicted values with respect to state ground truths at a plurality of time points.

In some optional embodiments, there may be one preset obstacle or a plurality of preset obstacles. In case of a plurality of preset obstacles, the credibility weight corresponding respectively to the sensor of the respective types may be determined by combining an error in an obstacle state predicted value of respective preset obstacle perceived by the sensor of the respective types with respect to an obstacle state ground truth of the preset obstacle.

With this embodiment, the credibility weight corresponding respectively to the sensor of the respective types is determined using the obstacle state ground truth of the preset obstacle and the obstacle state predicted value of the preset obstacle perceived respectively by the sensor of the respective types. As the credibility weight is determined based on an actual effect of perception by the sensor of the respective types, it therefore enables to guarantee accuracy of the credibility weight.

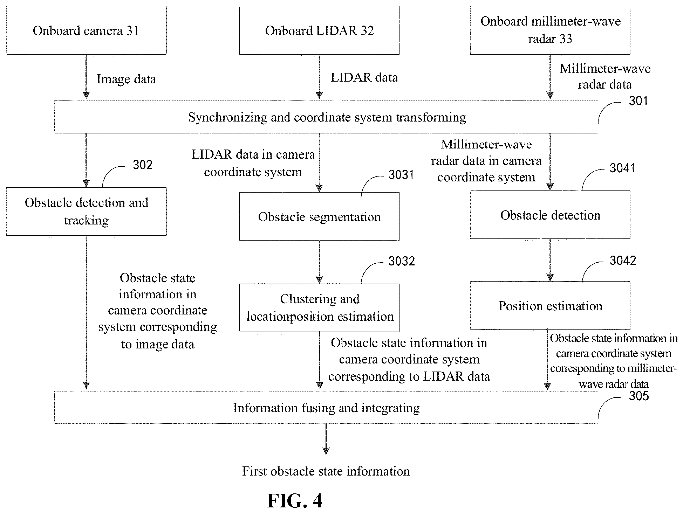

In some optional embodiments, FIG. 4 is a flowchart of determining obstacle state information according to an illustrative embodiment of this disclosure. As shown in FIG. 4, the plurality of types of sensors may include an onboard cam 31, onboard LIDAR 32, and onboard millimeter-wave radar 33. In actual application it is not limited to the three types of sensors described above. Image data may be acquired using the onboard cam 31, LIDAR data may be acquired using the onboard LIDAR 32, and millimeter-wave radar data may be acquired using the onboard millimeter-wave radar 33. Then, the first obstacle state information of the obstacle at the current time point is determined by steps as follows.

Step 301, Synchronizing and coordinate system transforming.

Specifically, as the sensors of the different types may acquire data at different frame rates, sensor data of different types may be out of sync in terms of timestamps, and therefore sensor data of a plurality of types are to be synchronized. In addition, the sensor data of the different types generally are data in coordinate systems local to the sensors. For example, the image data are data in an image coordinate system of the cam, and the LIDAR data are data in a LIDAR coordinate system. To facilitate subsequent multi-sensor perception result fusion, coordinate system transformation is to be performed on synchronized sensor data of respective types. In this embodiment, both the LIDAR data and the millimeter-wave radar data are transformed to a cam coordinate system (also referred to as a camera coordinate system), facilitating subsequent unification to same coordinate system with obstacle information perceived in the image data, such as unification to the cam coordinate system or the vehicle local coordinate system.

Step 302, Image data based obstacle detection and tracking. That is, obstacle detection and tracking is performed on the image data, to obtain the obstacle state information in the cam coordinate system corresponding to the image data.

A specific operation of image data based obstacle detection and tracking may be implemented in any mode of object detection and tracking in related art, and is not limited in embodiments of this disclosure.

Step 3031, Performing obstacle segmentation based on LIDAR data in the cam coordinate system, to obtain an obstacle segmentation result.

Step 3032, Performing clustering and position estimation on the obstacle segmentation result, to obtain obstacle state information in the cam coordinate system corresponding to the LIDAR data.

The obstacle state information in the cam coordinate system corresponding to the LIDAR data may be set as second obstacle state information perceived by the LIDAR, or the obstacle state information in the cam coordinate system may be transformed to the vehicle local coordinate system, to obtain the second obstacle state information. A specific operation of LIDAR data based obstacle segmentation and clustering and position estimation may use any mode of operation in related art that can be implemented, which is not limited in embodiments of this disclosure.

Step 3041, Performing obstacle detection based on millimeter-wave radar data in the cam coordinate system, to obtain an obstacle detection result.

Step 3042, Performing obstacle position estimation based on the obstacle detection result, to obtain obstacle state information in the cam coordinate system corresponding to the millimeter-wave radar data.

The obstacle state information in the cam coordinate system corresponding to the millimeter-wave radar data may be set as second obstacle state information perceived by the millimeter-wave radar, or the obstacle state information in the cam coordinate system may be transformed to the vehicle local coordinate system, to obtain the second obstacle state information. A specific operation of millimeter-wave radar data based obstacle detection and position estimation may use any mode of operation in related art that can be implemented, which is not limited in embodiments of this disclosure.

Step 305, Information fusing and integrating. That is, the obstacle state information corresponding to the image data as obtained in step 302, the obstacle state information corresponding to the LIDAR data as obtained in step 3032, and the obstacle state information corresponding to the millimeter-wave radar data as obtained in step 3042 are fused and integrated, to obtain the first obstacle state information of the obstacle.

Fusion and integration of the obstacle state information perceived by the sensor of the respective types may be implemented according to the credibility weight of the sensor of the respective types, referring to a foregoing embodiment, which is not repeated here.

In some optional embodiments, synchronizing may be implemented in a mode of alignment by interpolation.

In some optional embodiments, synchronizing and coordinate system transforming may be executed after the obstacle state information has been perceived by the respective types of sensors.

Illustratively, a sequence of obstacle state information regarding the obstacle, as perceived by the sensor of the any one type, may be expressed as follows.

$$\{(t_0, P_0^1, \cdots, P_0^k), (t_1, P_1^1, \cdots, P_1^k), \cdots (t_n, P_n^1, \cdots, P_n^k)\}$$

Wherein $t_i$ ($i = 0, 1, ..., n$) expresses an $i$-th time point, $t_n$ expresses the current time point, $P_i^1, \cdots, P_i^k$ express $k$ ($k$ being a positive integer) states of the obstacle perceived at the time point $t_i$, such as a state of a lateral position, a state of a longitudinal position, a state of a lateral velocity, a state of a longitudinal velocity, a state of the yaw, a state of the yaw rate, etc.

In some optional embodiments, for a sensor of an $m$-th type, $t_i$ ($i$ being greater than 0) is to meet a condition as follows.

$$\frac{1}{t_i - t_{i-1}} = f_m$$

Wherein $f_m$ **expresses** a frequency (which may be referred to as a frame rate) with which the sensor of the m-th type acquires data.

In some optional embodiments, a camera frequency is expressed by $f_1$, a LIDAR frequency is expressed by $f_2$, and $f_1 < f_2$. Then, the obstacle state information perceived by the LIDAR is aligned and synchronized to the obstacle state information perceived by the camera. That is, obstacle state information perceived by the LIDAR that corresponds to respective timestamps of the camera is obtained taking a timestamp of the obstacle state information perceived by the camera as a reference, where approximation using a principle of interpolation may be expressed as follows.

$$P_i^{k'} = P_{j-1}^{k}{}' + \frac{P_j^{k}{}' - P_{j-1}^{k}{}'}{t_j - t_{j-1}} \cdot (t_i - t_{j-1})$$

Wherein obstacle state information $P_i^k$ **perceived by the camera at a moment $t_i$** is mapped between moments $t_{j-1}$ and $t_j$ of the LIDAR, obstacle state information perceived by the LIDAR at the moments $t_{j-1}$ and $t_j$ are $P_{j-1}^{k\,'}$ and $P_j^{k'}$, respectively, and $P_i^{k'}$ expresses obstacle state information perceived by the LIDAR at the moment $t_i$. It should be noted that if in obstacle state information perceived by a high-frequency sensor (such as the LIDAR), there is already obstacle state information that corresponds to a timestamp of a low-frequency sensor (such as the camera), no interpolation is needed in aligning and synchronizing the high-frequency obstacle state information to the low-frequency obstacle state information, instead, it suffices to directly extract obstacle state information perceived by the high-frequency sensor that corresponds to the timestamp of the low-frequency sensor.

In some optional embodiments, the obstacle state information perceived by the camera may be aligned and synchronized to the obstacle state information perceived by the LIDAR, where approximation using a principle of interpolation may be expressed as follows.

$$P_i^k = P_{j-1}^k + \frac{P_j^k - P_{j-1}^k}{t_j - t_{j-1}} \cdot (t_i - t_{j-1})$$

Wherein obstacle state information $P_i^{k'}$ perceived by the LIDAR at a moment $t_i$ is mapped between moments $t_{j-1}$ and $t_j$ of the camera, obstacle state information perceived by the camera **at** the moments $t_{j-1}$ and $t_j$ are $P_{j-1}^k$ and $P_j^k$, respectively, and $P_i^k$ expresses obstacle state information perceived by the camera at the moment $t_i$.

In some optional embodiments, coordinate system transformation may be implemented using a translation matrix **T** and a rotation matrix **R** between two coordinate systems. Illustratively, transformation from a coordinate system of a sensor of any one type to the vehicle local coordinate system may be implemented according to a translation matrix and a rotation matrix from the coordinate system of the sensor to the vehicle local coordinate system that are calibrated in advance. A mode of calibrating a relation of transformation (which may include the translation matrix and the rotation matrix) from the sensor to the vehicle local coordinate system may be any mode of calibration in related art. For example, the position of the obstacle in the vehicle local coordinate system is preset as a reference position, and at the same time the position of the preset obstacle perceived by the sensor of the respective type is recorded. The rotation matrix and the translation matrix from the sensor coordinate system to the vehicle local coordinate system are solved using singular value decomposition according to the reference position and the position perceived by the sensor of the respective types, where a specific mode of calibration is not limited in embodiments of this disclosure.

In an actual application, transformation from the sensor coordinate system to the vehicle local coordinate system may be implemented as follows.

$$P' = R \cdot P + T$$

Wherein **P** expresses a pose of the obstacle in the sensor coordinate system, **P'** expresses a pose of the obstacle in the vehicle local coordinate system, **R** expresses the rotation matrix, and **T** expresses the translation matrix. Obstacle state information perceived by the sensors of the different types are aligned to same coordinate system (such as the vehicle local coordinate system) by coordinate system transformation, to obtain the first obstacle state information of the obstacle.

With this embodiment, the first obstacle state information of the obstacle is obtained by combining obstacle state information perceived by three sensors, i.e., the cam, the LIDAR, and the millimeter-wave radar, thereby enabling to effectively improve accuracy and reliability of the first obstacle state information.

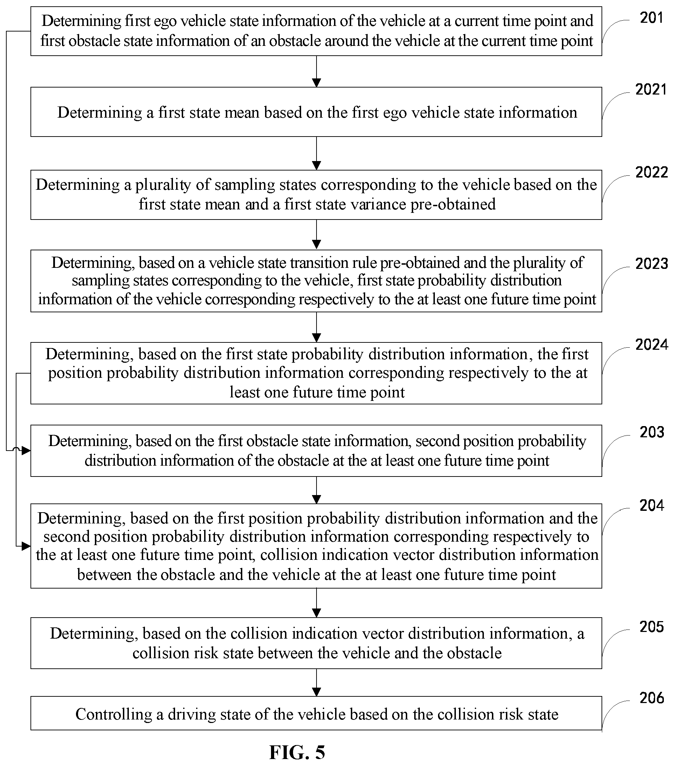

FIG. 5 is a flowchart of a method for controlling a vehicle according to yet another illustrative embodiment of this disclosure.

In some optional embodiments, based on the embodiment shown in FIG. 2, as shown in FIG. 5, step 202 of determining, based on the first ego vehicle state information, first position probability distribution information of the vehicle at at least one future time point may include steps as follows.

Step 2021, Determining a first state mean based on the first ego vehicle state information.

The first ego vehicle state information is determined as the first state mean.

Step 2022, Determining a plurality of sampling states corresponding to the vehicle based on the first state mean and a first state variance pre-obtained.

The first state variance may be calibrated in advance. The first state mean and the first state variance serve as an mean and a variance of the Gaussian distribution, forming a Gaussian state probability distribution of the vehicle. The plurality of sampling states corresponding to the vehicle refer to a plurality of states obtained by sampling a state probability distribution ellipse formed using the first state mean and the first state variance. A mode of sampling may be random sampling. The plurality of sampling states serve as reference states for vehicle trajectory prediction.

In some optional embodiments, in a vehicle calibrating process, a satellite positioning apparatus may be placed on the vehicle, and the first state variance may be determined based on a deviation in a pose of the vehicle perceived in real time by an odometer of the vehicle from a positioning pose of the satellite positioning apparatus.

Step 2023, Determining, based on a vehicle state transition rule pre-obtained and the plurality of sampling states corresponding to the vehicle, first state probability distribution information of the vehicle corresponding respectively to the at least one future time point.

The vehicle state transition rule may include a relation of transition of the state of the ego vehicle over time. The state of the ego vehicle may include the position, the velocity, the acceleration, the yaw, the yaw rate, etc. The position may include a lateral position and a longitudinal position.

In some optional embodiments, the vehicle state transition rule may be set according to a case of a change in a motion state of the vehicle. Optionally, the vehicle state transition rule may be a state transition rule based on a motion with a variable acceleration, thereby effectively improving accuracy of a future state prediction result. Illustratively, any one sampling state may be expressed as follows.

$$X'_t = [a_t \quad V_t \quad \theta_t \quad \dot{\theta}_t \quad x_t \quad y_t]^T$$

Then, the vehicle state transition rule may be expressed by a state transition function as follows.

$$\begin{bmatrix} \hat{a}_j \\ \hat{V}_j \\ \hat{\theta}_j \\ \hat{\dot{\theta}}_j \end{bmatrix} = \begin{bmatrix} 1 & 0 & 0 & 0 \\ j\Delta T & 1 & 0 & 0 \\ 0 & 0 & 1 & j\Delta T \\ 0 & 0 & 0 & 1 \end{bmatrix} \cdot \begin{bmatrix} a_t \\ V_t \\ \theta_t \\ \dot{\theta}_t \end{bmatrix} + \begin{bmatrix} j\Delta T & 0 \\ \dfrac{(j\Delta T)^2}{2} & 0 \\ 0 & \dfrac{(j\Delta T)^2}{2} \\ 0 & j\Delta T \end{bmatrix} \cdot \begin{bmatrix} J_t \\ \dot{\omega}_t \end{bmatrix}$$

$$\hat{x}_j = x_t + \sin\left(\theta_t + \dot{\theta}_t j\Delta T + \dot{\omega}_t \frac{(j\Delta T)^2}{2}\right)\left(V_t + \frac{a_t j\Delta T}{2} + J_t \frac{(j\Delta T)^2}{3}\right)j\Delta T$$

$$\hat{y}_j = y_t + \cos\left(\theta_t + \dot{\theta}_t j\Delta T + \dot{\omega}_t \frac{(j\Delta T)^2}{2}\right)\left(V_t + \frac{a_t j\Delta T}{2} + J_t \frac{(j\Delta T)^2}{3}\right)j\Delta T$$

Wherein $a_t$ expresses the acceleration, $V_t$ expresses the velocity, $\theta_t$ expresses the yaw, $\dot{\theta}_t$ expresses the yaw rate, $x_t$ expresses a longitudinal position coordinate, $y_t$ expresses a lateral position coordinate, $t$ expresses the current time point, and $j$ expresses a $j$-th future time point. $\widehat{X}'_j = \begin{bmatrix} \hat{a}_j & \hat{V}_j & \hat{\theta}_j & \hat{\dot{\theta}}_j & \hat{x}_j & \hat{y}_j \end{bmatrix}^T$ expresses a first prediction state of the $j$-th ($j$ = 1,2, ..., N, N expressing a number of future time points) future time point. $J_t$ expresses a rate of change in the acceleration, $\dot{\omega}_t$ expresses a rate of change in the yaw rate, and $\Delta T$ expresses a time step size, i.e., an interval between two adjacent time points. A first prediction state of a sampling state at a future time point may be obtained based on the state transition function. The first state probability distribution information of the vehicle at the any one future time point may be determined based on first prediction states of the sampling states at the any one future time point. The first state probability distribution information may include a state mean and a variance. The variance may be expressed by a covariance matrix.

Step 2024, Determining, based on the first state probability distribution information, the first position probability distribution information corresponding respectively to the at least one future time point

A lateral position mean, a lateral position variance, a longitudinal position mean, and a longitudinal position variance may be extracted from first state probability distribution information corresponding to a future time point. First position probability distribution information corresponding to the future time point is determined based on the lateral position mean, the lateral position variance, the longitudinal position mean, and the longitudinal position variance. That is, the first position probability distribution information includes an mean and a variance of a two-dimensional normal distribution (Gaussian distribution).

With this embodiment, by setting the vehicle state transition rule, the plurality of sampling states corresponding to the vehicle are transitioned, thereby effectively obtaining the state probability distribution information of the vehicle at the at least one future time point, implementing prediction of a probability of a future trajectory of the vehicle, and improving effectiveness of a vehicle trajectory prediction result.

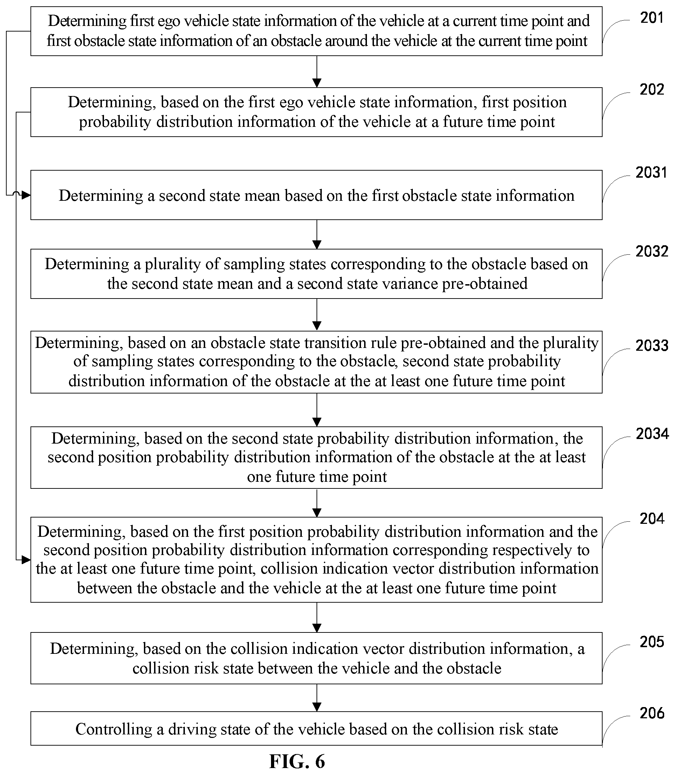

FIG. 6 is a flowchart of a method for controlling a vehicle according to still another illustrative embodiment of this disclosure.

In some optional embodiments, based on the embodiment shown in FIG. 2, as shown in FIG. 6, step 203 of determining, based on the first obstacle state information, second position probability distribution information of the obstacle at the at least one future time point may include steps as follows.

Step 2031, Determining a second state mean based on the first obstacle state information.

Step 2032, Determining a plurality of sampling states corresponding to the obstacle based on the second state mean and a second state variance pre-obtained.

Step 2033, Determining, based on an obstacle state transition rule pre-obtained and the plurality of sampling states corresponding to the obstacle, second state probability distribution information of the obstacle at the at least one future time point.

Step 2034, Determining, based on the second state probability distribution information, the second position probability distribution information of the obstacle at the at least one future time point.

A specific operation of determining second position probability distribution information of the obstacle at a future time point in step 2031 to step 2034 described above is similar to the determining the first position probability distribution information of the vehicle in an embodiment described above, with the exception that there may be different obstacle state transition rules corresponding to different types of obstacles. An obstacle type may include another vehicle, a pedestrian, and a cyclist. The different types of obstacle state transition rules may be determined according to nature of motion of the different types of obstacles in an actual scenario. Optionally, the obstacle state transition rule may be a state transition rule based on a motion with a variable acceleration, to improve accuracy of a future state prediction result. An obstacle state transition rule for the another vehicle may be consistent with the obstacle transition rule for the vehicle described above. Obstacle state transition rules for the pedestrian and the cyclist may differ from the obstacle transition rule for the vehicle described above. For example, a sampling state corresponding to a pedestrian-type obstacle is expressed by:

$$X'_t = \begin{bmatrix} a_{x\_t} & a_{y\_t} & V_{x\_t} & V_{y\_t} & x_t & y_t \end{bmatrix}^T$$

Then, an obstacle state transition rule corresponding to the pedestrian type may be expressed as follows.

$$\begin{bmatrix} \hat{a}_{x\_j} \\ \hat{a}_{y\_j} \\ \hat{V}_{x\_j} \\ \hat{V}_{y\_j} \end{bmatrix} = \begin{bmatrix} 1 & 0 & 0 & 0 \\ 0 & 1 & 0 & 0 \\ j\Delta T & 0 & 1 & 0 \\ 0 & j\Delta T & 0 & 1 \end{bmatrix} \cdot \begin{bmatrix} a_{x\_t} \\ a_{y\_t} \\ V_{x\_t} \\ V_{y\_t} \end{bmatrix} + \begin{bmatrix} j\Delta T & 0 \\ j\Delta T & 0 \\ 0 & \dfrac{(j\Delta T)^2}{2} \\ 0 & \dfrac{(j\Delta T)^2}{2} \end{bmatrix} \cdot \begin{bmatrix} J_{x\_t} \\ J_{y\_t} \end{bmatrix}$$

$$\hat{x}_j = x_t + \left( V_{x\_t} + \frac{a_{x\_t} j\Delta T}{2} + J_{x\_t} \frac{(j\Delta T)^2}{3} \right) j\Delta T$$

$$\hat{y}_j = y_t + \left( V_{y\_t} + \frac{a_{y\_t} j\Delta T}{2} + J_{y\_t} \frac{(j\Delta T)^2}{3} \right) j\Delta T$$

Wherein $t$ expresses the current time point, $j$ expresses the $j$-th future time point, $\Delta T$ expresses the time step size, $a_{x-t}$ expresses a longitudinal acceleration of the obstacle, $a_{y-t}$ expresses a lateral acceleration of the obstacle, $V_{x-t}$ expresses the longitudinal velocity of the obstacle, $x_t$ expresses a longitudinal position coordinate of the obstacle, and $y_t$ expresses a lateral position coordinate of the obstacle. $\hat{X}'_j = [\hat{a}_{x\_j} \, \hat{a}_{y\_j} \, \hat{V}_{x\_j} \, \hat{V}_{y\_j} \, \hat{x}_j \, \hat{y}_j]^T$ expresses a second prediction state of the $j$-th ($j = 1, 2, ..., N$, $N$ expressing the number of future time points) future time point. $J_{x\_t}$ expresses a rate of change in the longitudinal acceleration. $J_{y\_t}$ expresses a rate of change in the lateral acceleration. The second position probability distribution information of the obstacle at the at least one future time point is determined according to a second prediction state of a sampling state corresponding to the obstacle at a future time point. It may be seen that as the pedestrian-type obstacle differ greatly from a vehicle type in terms of a length, a width, a size, and a change in a motion state, and a box for detecting the pedestrian is small, it is not easy to identify a clear directionality of the pedestrian-type obstacle relative to the vehicle type, and there are great deviations in a yaw and a yaw rate computed for the pedestrian-type. Therefore, use of a state transition equation more applicable to the pedestrian-type as described above helps improve accuracy and effectiveness of a result of predicting a future state of the obstacle.

For an obstacle state transition rule for a cyclist type (also referred to as a two-wheeler type), as a length and a width of the two-wheeler type differ greatly, monitoring the two-wheeler may be similar to monitoring the pedestrian-type if the two-wheeler and the ego vehicle drive toward each other, and monitoring the two-wheeler may be similar to monitoring the vehicle type if the two-wheeler makes a crossing move laterally relative to the ego vehicle. A state transition function more suitable for the two-wheeler may be set by combining the two cases, for predicting a state of the two-wheeler at a future time point, so as to improve accuracy and effectiveness of the result of predicting the state of the obstacle. An obstacle state transition rule corresponding to the two-wheeler type may be expressed as follows.

$$X'_t = \begin{bmatrix} a_{x\_t} & a_{y\_t} & V_{x\_t} & V_{y\_t} & \theta_t & \dot{\theta}_t & x_t & y_t \end{bmatrix}^T$$

$$\begin{bmatrix} \hat{a}_{x\_j} \\ \hat{a}_{y\_j} \\ \hat{V}_{x\_j} \\ \hat{V}_{y\_j} \\ \hat{\theta}_j \\ \hat{\dot{\theta}}_j \end{bmatrix} = \begin{bmatrix} 1 & 0 & 0 & 0 \\ 0 & 1 & 0 & 0 \\ j\Delta T & 0 & 1 & 0 \\ 0 & j\Delta T & 0 & 1 \\ 0 & 0 & 1 & j\Delta T \\ 0 & 0 & 0 & 1 \end{bmatrix} \cdot \begin{bmatrix} a_{x\_t} \\ a_{y\_t} \\ V_{x\_t} \\ V_{y\_t} \\ \theta_t \\ \dot{\theta}_t \end{bmatrix} + \begin{bmatrix} j\Delta T & 0 & 0 \\ j\Delta T & 0 & 0 \\ 0 & \frac{(j\Delta T)^2}{2} & 0 \\ 0 & \frac{(j\Delta T)^2}{2} & 0 \\ 0 & 0 & \frac{(j\Delta T)^2}{2} \\ 0 & 0 & j\Delta T \end{bmatrix} \cdot \begin{bmatrix} J_{x\_t} \\ J_{y\_t} \\ \dot{\omega}_t \end{bmatrix} \qquad \text{mode 1}$$

$$\hat{x}_j = x_t + \left( V_{x\_t} + \frac{a_{x\_t} j\Delta T}{2} + J_{x\_t} \frac{(j\Delta T)^2}{3} \right) j\Delta T$$

$$\hat{y}_j = y_t + \left( V_{y\_t} + \frac{a_{y\_t} j\Delta T}{2} + J_{y\_t} \frac{(j\Delta T)^2}{3} \right) j\Delta T$$

Wherein $X'_t$ expresses the sampling state corresponding to the obstacle, $t$ expresses the current time point, $j$ expresses the $j$-th future time point, $\Delta T$ expresses the time step size, $a_{x\_t}$ expresses the longitudinal acceleration of the obstacle, $a_{y\_t}$ expresses the lateral acceleration of the obstacle, $V_{x\_t}$ expresses the longitudinal velocity of the obstacle, $\theta_t$ expresses the yaw of the obstacle, $\dot{\theta}_t$ expresses the yaw rate of the obstacle, $x_t$ expresses the longitudinal position coordinate of the obstacle, and $y_t$ expresses the lateral position coordinate of the obstacle. $\hat{X}'_j = \begin{bmatrix} \hat{a}_{x\_j} & \hat{a}_{y\_j} & \hat{V}_{x\_j} & \hat{V}_{y\_j} & \hat{\theta}_j & \hat{\dot{\theta}}_j & \hat{x}_j & \hat{y}_j \end{bmatrix}^T$ expresses the second prediction state of the $j$-th ($j$ = 1,2, ..., N, N expressing the number of future time points) future time point. $J_{x\_t}$ expresses the rate of change in the longitudinal acceleration $a_{x\_c}$. $J_{y\_t}$ expresses the rate of change in the lateral acceleration $a_{y\_t}$. $\dot{\omega}_t$ expresses a rate of change in the yaw rate $\dot{\theta}_t$.

In some optional embodiments, a synthetic acceleration $a_t$ and a synthetic velocity $V_t$ for a two-wheeler type obstacle further is computed, and changes in the lateral position and the longitudinal position may be computed based on the synthetic acceleration and the synthetic velocity, which may be expressed as follows.

$$a_t = \sqrt{a_{x\_t}^2 + a_{y\_t}^2}$$

$$V_t = \sqrt{V_{x\_t}^2 + V_{y\_t}^2}$$

$$\hat{x}_j = x_t + \sin\left( \theta_t + \dot{\theta}_t j\Delta T + \dot{\omega}_t \frac{(j\Delta T)^2}{2} \right)\left( V_t + \frac{a_t j\Delta T}{2} + J_t \frac{(j\Delta T)^2}{3} \right) j\Delta T$$

$$\hat{y}_j = y_t + \cos\left( \theta_t + \dot{\theta}_t j\Delta T + \dot{\omega}_t \frac{(j\Delta T)^2}{2} \right)\left( V_t + \frac{a_t j\Delta T}{2} + J_t \frac{(j\Delta T)^2}{3} \right) j\Delta T$$

mode 2

For meanings of the symbols, refer to a foregoing content.

In an actual application, it may be determined, according to a driving state of the two-wheeler relative to ego vehicle, which mode described above is to be used to compute the lateral position and the longitudinal position. For example, the lateral position and the longitudinal position are computed in mode 1 as described above if the two-wheeler and the ego vehicle drive toward each other. Otherwise, the lateral position and the longitudinal position are computed using the synthetic acceleration and the synthetic velocity of mode 2 as described above.

In some optional embodiments, a state transition rule for an obstacle of another type, i.e., a type other than another vehicle, the pedestrian, and the cyclist, may be determined according to a length (L) and a width (H) of the obstacle of another type. For example, the future state is predicted using a state transition rule corresponding to the pedestrian type if L/H<1.5, L<1m, and H<1m. The future state is predicted using a state transition rule corresponding to the vehicle type if 1.5<L/H<3, L<1m, and H<1m. In other cases, the future state is predicted using a state transition rule corresponding to the two-wheeler type, specifics of which are not elaborated one by one.

With this embodiment, probabilistic distribution of a future trajectory of the obstacle is implemented using the plurality of sampling states corresponding to the obstacle and the obstacle state transition rule, thereby improving accuracy and effectiveness of a result of predicting the trajectory of the obstacle.

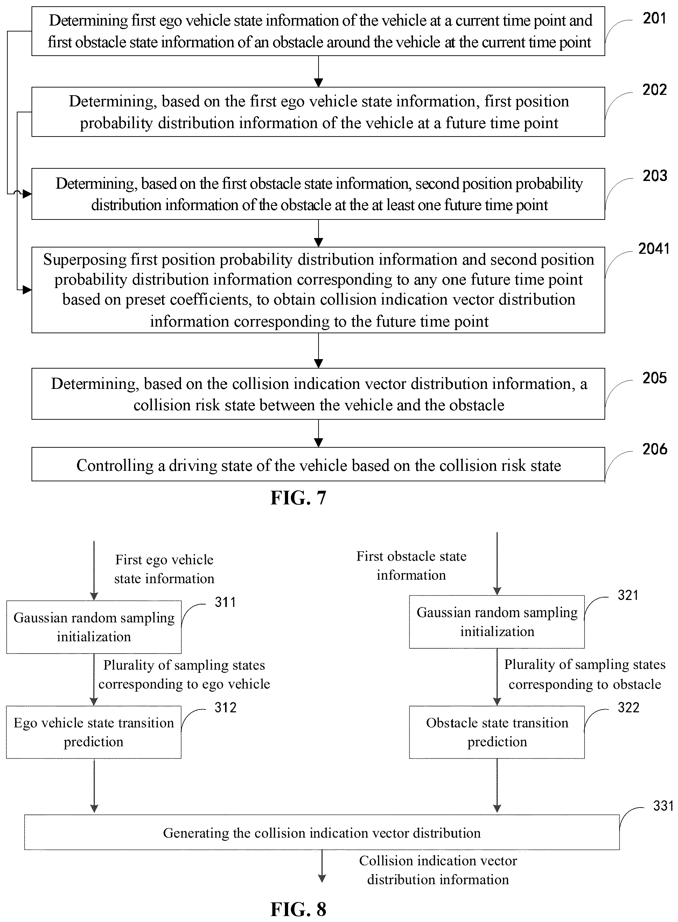

FIG. 7 is a flowchart of a method for controlling a vehicle according to yet another illustrative embodiment of this disclosure.

In some optional embodiments, based on the embodiment shown in FIG. 2, as shown in FIG. 7, step 204 of determining, based on the first position probability distribution information and the second position probability distribution information at the at least one future time point, collision indication vector distribution information between the obstacle and the vehicle at the at least one future time point may include a step as follows.

Step 2041, Superposing first position probability distribution information and second position probability distribution information corresponding to any one future time point based on preset coefficients, to obtain collision indication vector distribution information corresponding to the future time point.

The preset coefficients may include a first coefficient corresponding to the first position probability distribution information and a second coefficient corresponding to the second position probability distribution information. To obtain the relation of spatial position distribution of the obstacle relative to the ego vehicle, the collision indication vector distribution information is the information on the distribution of the vectors pointing from the first position probability distribution information toward the second position probability distribution information. Therefore, the first coefficient is -1, and the second coefficient is 1.

Illustratively, the first position probability distribution information is expressed by N, the second position probability distribution information is expressed by M. Then, the collision indication vector distribution information may be expressed as follows.

$$NM = M - N$$

Wherein $\boldsymbol{M} - \boldsymbol{N}$ expresses superposition of the two probability distributions (normal distributions), the coefficient of $\boldsymbol{N}$ is -1, and the coefficient of $\boldsymbol{M}$ is 1. In embodiments of this disclosure, both $\boldsymbol{M}$ and $\boldsymbol{N}$ are two-dimensional normal distributions. Therefore, the collision indication vector distribution information is obtained using a rule of superposing two-dimensional normal distributions with preset coefficients.

Illustratively, a vector distribution corresponding to the collision indication vector distribution information at any one future time point may be expressed as follows.

$$\begin{bmatrix} x \\ y \end{bmatrix} \sim N\left( \begin{bmatrix} \mu_1 \\ \mu_2 \end{bmatrix}, \begin{bmatrix} \sigma_1^2 & \sigma_{21} \\ \sigma_{12} & \sigma_2^2 \end{bmatrix} \right)$$

Wherein $\boldsymbol{x}$ expresses a variable of the longitudinal position of the obstacle relative to ego vehicle, and $\boldsymbol{y}$ expresses a variable of the lateral position of the obstacle relative to ego vehicle. $\mu_1$ and $\mu_2$ express means of $\boldsymbol{x}$ and $\boldsymbol{y}$, respectively, $\sigma_1^2$ and $\sigma_2^2$ express variances of $\boldsymbol{x}$ and $\boldsymbol{y}$, respectively; $\sigma_{12}$ and $\sigma_{21}$ express cross-covariances between $\boldsymbol{x}$ and $\boldsymbol{y}$, respectively. A specific value of a parameter may be determined according to the position means and the position variances of $\boldsymbol{N}$ and $\boldsymbol{M}$ described above and the rule of superposing the two-dimensional normal distributions.

Collision indication vector distribution information (which may be expressed by $\overrightarrow{\boldsymbol{CA}}_j$) corresponding to a future time point $\boldsymbol{t_j}$ ($\boldsymbol{j} = 1, 2, \dots, \boldsymbol{N}$, $\boldsymbol{N}$ expressing the number of future time points) may be obtained based on a computing process as described above, and the collision indication vector distribution information corresponding respectively to the at least one future time point may be expressed by an information sequence as follows.

$$\{(t_1, \overrightarrow{CA}_1), (t_2, \overrightarrow{CA}_2), \cdots, (t_N, \overrightarrow{CA}_N)\}$$

One $\overrightarrow{CA}_j$ corresponds to one two-dimensional normal distribution, which may be expressed as follows.

$$\begin{bmatrix} x^j \\ y^j \end{bmatrix} \sim N^j\left( \begin{bmatrix} {\mu^j}_1 \\ {\mu^j}_2 \end{bmatrix}, \begin{bmatrix} \sigma_{1,j}^2 & \sigma_{21,j} \\ \sigma_{12,j} & \sigma_{2,j}^2 \end{bmatrix} \right)$$

Wherein $\boldsymbol{x^i}$, $\boldsymbol{y^i}$ express the variable of the longitudinal position and the variable of the lateral position of the obstacle relative to the ego vehicle at the $\boldsymbol{j}$-th future time point, respectively. $\mu^j_1$ and $\mu^j_2$ express means of $\boldsymbol{x^j}$ and $\boldsymbol{y^j}$,

respectively, $\sigma_{1,j}^2$ and $\sigma_{2,j}^2$ express variances of $x^j$ and $y^j$, respectively; and $\sigma_{12,j}$ and $\sigma_{21,j}$ express cross-covariances between $x^j$ and $y^j$, respectively.

With this embodiment, collision indication vector distribution information is obtained by superposing first position probability distribution information and second position probability distribution information at the future time point according to preset coefficients, such that the collision indication vector distribution information is enabled to effectively represent the information on the probabilistic distribution of the spatial position of the obstacle relative to the ego vehicle at the future time point. Due to the probabilistic distribution of the spatial position of the obstacle relative to the ego vehicle at the respective at least one future time point, according to a nature of a vector, this is equivalent to unifying the position probability distribution of the obstacle at the at least one future time point to one reference position (i.e., the position of ego vehicle), thereby providing accurate effective reference data for computing the risk probability of collision.

In some optional embodiments, FIG. 8 is a flowchart of generating collision indication vector distribution information according to an illustrative embodiment of this disclosure. As shown in FIG. 8, after the first ego vehicle state information and the first obstacle state information have been obtained, the collision indication vector distribution information may be generated using steps as follows.

Step 311, Performing Gaussian random sampling initialization based on the first ego vehicle state information, to obtain the plurality of sampling states corresponding to the ego vehicle.

Specifically, Gaussian random sampling initialization may include that: the first ego vehicle state information is determined as the first state mean, and a Gaussian probability distribution ellipse following the first state mean and the first state variance is randomly sampled based on the first state mean and the first state variance pre-obtained, to obtain the plurality of sampling states.

Step 312, predicting the ego vehicle state transition. That is, state transition prediction is performed respectively on the sampling states corresponding to the ego vehicle based on the vehicle state transition rule pre-obtained, to obtain predicted states of the respective sampling states at a future time point. The first position probability distribution information (i.e., the position mean and variance) of the ego vehicle at the future time point is determined according to the predicted states of the respective sampling states at the future time point.

Step 321, Performing Gaussian random sampling initialization based on the first obstacle state information, to obtain the plurality of sampling states corresponding to the obstacle.

Step 322, Predicting obstacle state transition. That is, the second position probability distribution information of the obstacle at a future time point is determined using the obstacle state transition rule. A specific principle here is similar to that for the ego vehicle, which is not repeated here.

A specific operation in step 321 to step 322 is similar to that in step 311 to step 312 described above, which is not repeated here.

Step 331, Generating the collision indication vector distribution. That is, the collision indication vector distribution information corresponding respectively to the at least one future time point is generated based on the first position probability distribution information and the second position probability distribution information corresponding respectively to the at least one future time point.

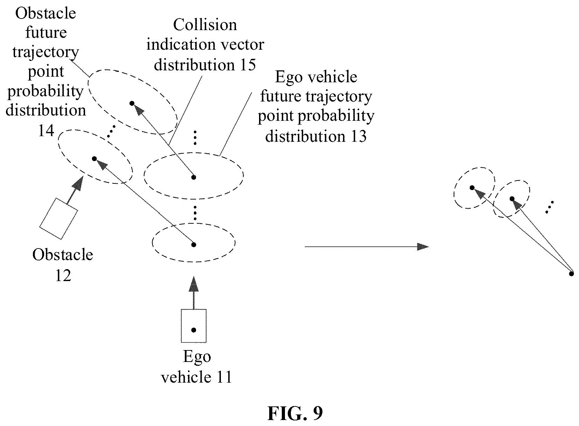

Illustratively, FIG. 9 is a diagram of collision indication vector distribution information of a plurality of future time points according to an illustrative embodiment of this disclosure. As shown in FIG. 9, based on the collision indication vector distribution 15 corresponding respectively to the at least one future time point as shown in FIG. 1, the collision indication vector distribution 15 at the at least one future time point may be expressed by a plurality of vector distributions with one starting point. One future time point corresponds to one vector distribution. An elliptical region of the vector distribution expresses an ellipse of probabilistic distribution of the spatial position of the obstacle relative to the ego vehicle at the respective future time points. The risk probability of collision (i.e., a collision risk value) at the at least one future time point is determined according to a relation of a distance of the ellipse of probabilistic distribution of the relative spatial position of the obstacle corresponding to the at least one future time point relative to the ego vehicle.

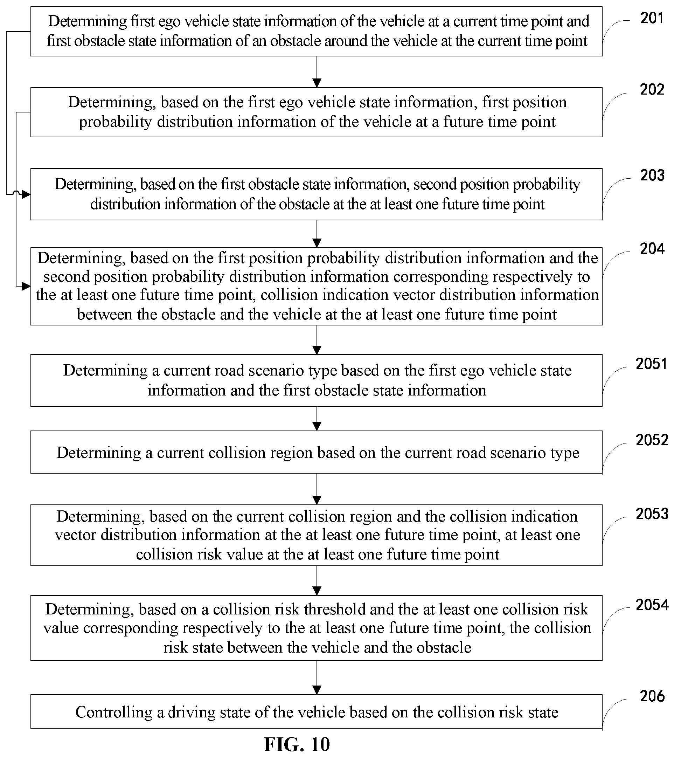

FIG. 10 is a flowchart of a method for controlling a vehicle according to still another illustrative embodiment of this disclosure.

In some optional embodiments, based on the embodiment shown in FIG. 2, as shown in FIG. 10, step 205 of determining the collision risk state of the vehicle and the obstacle based on the collision indication vector distribution corresponding respectively to the at least one future time point may include steps as follows.

Step 2051, Determining a current road scenario type based on the first ego vehicle state information and the first obstacle state information

A road scenario type (which may be referred to as a scenario type for short) may include but is not limited to a vehicle-following scenario, a crossing scenario, and a turning scenario. A current type of a road scenario of the vehicle is determined according to the first ego vehicle state information of the vehicle and the first obstacle state information of the obstacle, as the current road scenario type.

In some optional embodiments, the current road scenario type may be determined according to a relation of the position of the obstacle relative to the ego vehicle, a relation of the velocity of the obstacle relative to the ego vehicle relation, etc. For example, if the lateral velocity of the obstacle relative to the ego vehicle is greater than a lateral velocity threshold, the current road scenario type is determined to be the crossing scenario. If the lateral velocity of the obstacle relative to the ego vehicle is less than the lateral velocity threshold, and the ego vehicle does not tend to turn, the current road scenario type is determined as the vehicle-following type. If the ego vehicle tends to turn, the current road scenario type is determined to be the turning scenario.

Step 2052, Determining a current collision region based on the current road scenario type.

A region in which collision may occur may differ, depending on a road scenario type. Different collision regions may be set for different road scenario types. A collision region is a region of a certain range around, and including the position of the ego vehicle. The current collision region is determined according to the current road scenario type and preconfigured collision regions corresponding to the different road scenario types.

In some optional embodiments, a collision region corresponding to the vehicle-following scenario may include two types, i.e., a vehicle-following collision region and a vehicle-following and overtaking collision region. A collision region corresponding to the crossing scenario may include a crossing collision region and a crossing and lateral deviating collision region. A collision region corresponding to the turning scenario may include a left turn collision region and a right turn collision region. The current collision region may be determined in real time according to collision region determining rules corresponding to the different scenario types. For example, in the vehicle-following scenario, if the ego vehicle tends to overtake, the current collision region may be determined as the vehicle-following and overtaking collision region. Then, the current collision region is determined according to a parameter of the vehicle-following and overtaking collision region. The parameter may include a parameter configured for determining a region boundary of the current collision region. The region boundary may include boundaries in four directions around the ego vehicle. The parameter may be set according to a size of the ego vehicle and the size of the obstacle. It may be determined, according to the velocity of the ego vehicle relative to the obstacle and a longitudinal distance between the obstacle and the ego vehicle in the vehicle local coordinate system, whether the ego vehicle tends to overtake. For example, if the velocity of ego vehicle relative to the obstacle is greater than zero, and the longitudinal distance between the ego vehicle and the obstacle is less than a distance threshold (such as 5m), it is determined that the ego vehicle tends to overtake.

Step 2053, Determining, based on the current collision region and the collision indication vector distribution information at the at least one future time point, at least one collision risk value at the at least one future time point.

The current collision region expresses a region in which there is a risk of collision in the current road scenario. The collision indication vector distribution information expresses the probabilistic distribution of the spatial position of the obstacle relative to the ego vehicle. A size of an overlap region of the current collision region and the ellipse of probabilistic distribution of the spatial position of the obstacle relative to the ego vehicle may represent a size of the risk probability of collision of the ego vehicle and the obstacle. Based on this, at least one value of the risk probability of collision corresponding respectively to the at least one future time point may be determined based on a relation of the current collision region relative to the collision indication vector distribution information corresponding respectively to the at least one future time point, as the collision risk value.

Step 2054, Determining, based on a collision risk threshold and the at least one collision risk value corresponding respectively to the at least one future time point, the collision risk state between the vehicle and the obstacle.

The collision risk threshold may be set according to an actual safety need. if a collision risk value corresponding to a future time point exceeds (is greater than or equal to) the collision risk threshold, it may be determined that there is a risk of collision of the ego vehicle with the obstacle at the future time point. If the collision risk value does not exceed the collision risk threshold, it may be determined that there is no risk of collision at the future time point. The collision risk state between the vehicle and the obstacle is determined by combining at least one collision risk state corresponding respectively to the at least one future time point. For example, if the collision risk state at the at least one future time point is risking collision, it is determined that the collision risk state between the vehicle and the obstacle is risking collision. If there is no risk of collision at any of the at least one future time point, it is determined that the collision risk state between the vehicle and the obstacle is collision risk free.

With embodiments of this disclosure, by distinguishing the different road scenario types, and setting the different collision regions for the different road scenario types, the obtained collision risk value is enabled to better match a case of an actual road scenario, thereby further improving accuracy of the collision risk state.

In some optional embodiments, step 2051 of determining a current road scenario type based on the first ego vehicle state information and the first obstacle state information includes: determining a lateral velocity of the obstacle based on the first obstacle state information; determining, based on the first ego vehicle state information, a turning tendency state of the vehicle; and determining the current road scenario type based on the lateral velocity of the obstacle and the turning tendency state of the vehicle.

The lateral velocity of the obstacle is the relative lateral velocity of the obstacle relative to the ego vehicle. The first obstacle state information is state information in the vehicle local coordinate system. Therefore, a lateral velocity in the first obstacle state information is the lateral velocity of the obstacle relative to the ego vehicle. The turning tendency state of the vehicle may include two states, i.e., tending to turn and not tending to turn. The lateral velocity of the obstacle may represent whether the obstacle tends to make a crossing move. It may be determined which one of the vehicle-following scenario, the crossing scenario, and the turning scenario is the current road scenario type according to whether the obstacle tends to make a crossing move and whether ego vehicle tends to turn. For example, if the lateral velocity of the obstacle is less than the velocity threshold and the ego vehicle does not tend to turn, the current road scenario type is determined as the vehicle-following scenario. If the lateral velocity of the obstacle is greater than or equal to the velocity threshold, and the ego vehicle does not tend to turn, the current road scenario type is determined as the crossing scenario. If the ego vehicle tends to turn, the current road scenario type is determined as the turning scenario.

In some optional embodiments, it may be determined whether the ego vehicle tends to turn according to a relation of a size of an angle of rotation of a steering wheel and an angle threshold, and a relation of a size of a speed of rotation of the steering wheel and an angular velocity threshold. For example, the angle of rotation of the steering wheel is less than 1rad and the speed of rotation of the steering wheel is less than 1rad/s. Then, it is determined that the ego vehicle does not tend to turn.

With this embodiment, the current road scenario type may be determined accurately based on the lateral velocity of the obstacle and whether ego vehicle tends to turn, thereby providing an accurate effective road scenario type reference for determining the collision region.

In some optional embodiments, step 2052 of determining a current collision region according to the current road scenario type includes: in response to the current road scenario type being a first type, determining an overtaking tendency state of the vehicle; determining the current collision region based on the overtaking tendency state of the vehicle; in response to the current road scenario type being a second type, determining the current collision region according to a longitudinal velocity of the obstacle; and in response to the current road scenario type being a third type, determining the current collision region according to a turning direction of the vehicle.

The first type may be the vehicle-following scenario, the second type may be the crossing scenario, and the third type may be the turning scenario. The overtaking tendency state of the vehicle may include two states, i.e., tending to overtake and not tending to overtake. Whether the vehicle tends to overtake may be determined by referring to a mode of determination in a foregoing embodiment. In a scenario of the first type, if there is an overtaking tendency, it is determined that the current collision region is the vehicle-following and overtaking collision region; and if there is no overtaking tendency, it is determined that the current collision region is the vehicle-following collision region. The longitudinal velocity of the obstacle may be a relative longitudinal velocity of the obstacle relative to the ego vehicle. In case of the second type, if the longitudinal velocity of the obstacle is greater than a longitudinal velocity threshold (such as 2m/s), it shows that the obstacle may deviate from the ego vehicle in a longitudinal direction in a crossing process. Then, it is determined that the current collision region is the crossing and lateral deviating collision region. Otherwise (i.e., the longitudinal velocity of the obstacle is less than the longitudinal velocity threshold), it is determined that the current collision region is the crossing collision region. The turning direction of the vehicle may include two directions, i.e., turning left and turning right. In a scenario of the third type, if the turning direction is turning left, it is determined that the current collision region is the left turn collision region; and if the turning direction is turning right, it is determined that the current collision region is the right turn collision region.

In some optional embodiments, different parameters may be set for different types of collision regions. Such a parameter is configured for determining a boundary of a collision region. The current collision region is determined according to the parameters of the different types of collision regions, where a collision region type may include the vehicle-following collision region, the vehicle-following and overtaking collision region, the crossing collision region, the crossing and lateral deviating collision region, the left turn collision region, and the right turn collision region as described above, etc.

With this embodiment, collision region determining modes corresponding respectively to the different road scenario types are set, thereby accurately determining the current collision region, providing the accurate reliable collision region for determining the collision risk value, and improving accuracy of the collision risk value.

In some optional embodiments, the determining the current collision region based on the overtaking tendency state of the vehicle may include: determining the current collision region based on the overtaking tendency state of the vehicle, a first length and a first width of the vehicle, and a second length and a second width of the obstacle.

A type (the vehicle-following collision region, the vehicle-following and overtaking collision region) of the current collision region may be determined based on the overtaking tendency state of the vehicle. Then, a parameter corresponding to the current collision region may be determined according to the type of the current collision region, the first length and the first width of the vehicle, and the second length and the second width of the obstacle, and the current collision region may be determined according to the parameter. For example, the parameter may include distances of respective boundaries of the current collision region to the geometric center point (or the rear axle center) of the ego vehicle. Positions of the respective boundaries in the vehicle local coordinate system may be computed according to the parameter, and the current collision region may be further obtained according to the respective boundaries.

In some optional embodiments, the determining the current collision region according to a longitudinal velocity of the obstacle may include: determining the current collision region according to the longitudinal velocity of the obstacle, the first length and the first width of the vehicle, and the second length and the second width of the obstacle.

The type (the crossing collision region, the crossing and lateral deviating collision region) of the current collision region may be determined according to the longitudinal velocity of the obstacle. Then, the parameter corresponding to the current collision region may be determined according to the type of the current collision region, combining the size of the vehicle and the size of the obstacle. The boundaries of the current collision region may be determined according to the parameter, and then the current collision region may be obtained.

In some optional embodiments, the determining the current collision region according to a turning direction of the vehicle may include: determining the current collision region according to the turning direction of the vehicle, the first length and the first width of the vehicle, and the second length and the second width of the obstacle.

The type (the left turn collision region, the right turn collision region) of the current collision region may be determined according to the turning direction of the vehicle. The parameter corresponding to the current collision region may be determined according to the type of the current collision region, combining the sizes (including the lengths and the widths) of ego vehicle and the obstacle. The boundaries of the current collision region may be determined according to the parameter, and then the current collision region may be obtained.

In some optional embodiments, the first length and the first width of the vehicle may be calibrated in advance. The second length and the second width of the obstacle may be obtained from the first obstacle state information of the obstacle. That is, the second length and the second width of the obstacle may be determined from an obstacle size in the first obstacle state information.

With this embodiment, as the current collision region may be determined adaptively combining the sizes of the ego vehicle and the obstacle, it is enabled to further improve accuracy and reliability of the current collision region, and then improve accuracy and reliability of the collision risk state.

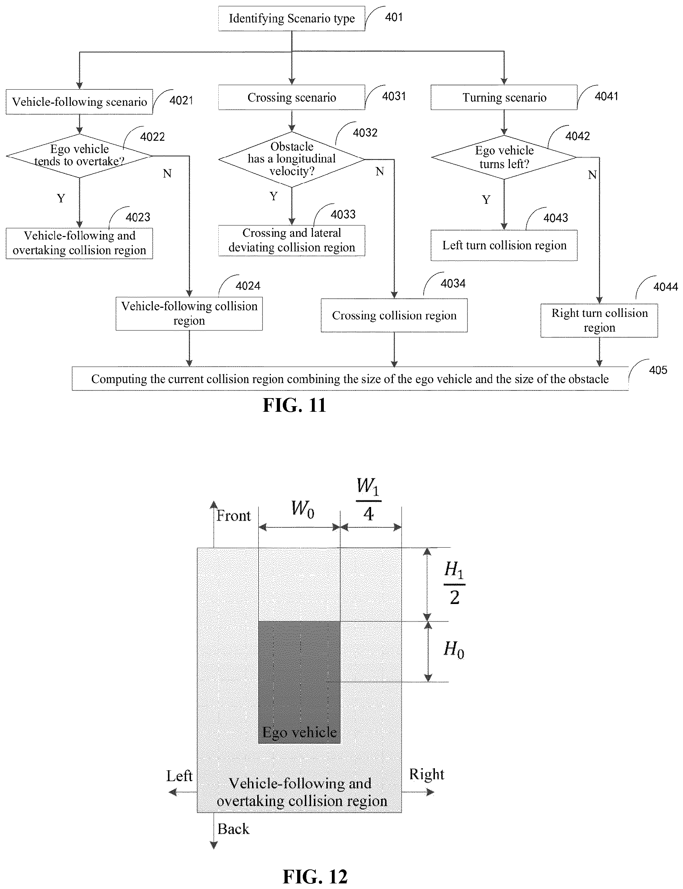

In some optional embodiments, FIG. 11 is a flowchart of determining a current collision region according to an illustrative embodiment of this disclosure. As shown in FIG. 11, the flowchart includes steps as follows.

Step 401, Identifying Scenario type, i.e., determining a current road scenario type based on the first the ego vehicle state information and the first obstacle state information

Step 4021, Determining the current road scenario type as the vehicle-following scenario, then the flow going to step 4022.

Step 4022, Determining whether the ego vehicle tends to overtake, where if yes, the flow goes to step 4023, and otherwise if no, the flow goes to step 4024.

Step 4023, Determining that the current collision region is the vehicle-following and overtaking collision region.

Step 4024, Determining that the current collision region is the vehicle-following collision region.

Step 4031, Determining that the current road scenario type is the crossing scenario, then the flow going to step 4032.

Step 4032, Determining whether the obstacle has a longitudinal velocity, where if yes, the flow goes to step 4033, and otherwise if no, the flow goes to step 4034.

Step 4033, Determining that the current collision region is the crossing and lateral deviating collision region.

Step 4034, Determining that the current collision region is the crossing collision region.

Step 4041, Determining that the current road scenario type is the turning scenario, then the flow going to step 4042.

Step 4042, Determining whether ego vehicle turns left, where if yes, the flow goes to step 4043, and otherwise if no, the flow goes to step 4044.

Step 4043, Determining that the current collision region is the left turn collision region.

Step 4044, Determining that the current collision region is the right turn collision region.

Step 405, Computing the current collision region combining the size of the ego vehicle and the size of the obstacle.

For a specific operation in the steps described above, one may refer to a foregoing embodiment, which is not repeated here.

In some optional embodiments, FIG. 12 is a diagram of a vehicle-following and overtaking collision region according to an illustrative embodiment of this disclosure. As shown in FIG. 12, $W_0$ expresses the width (i.e., the first width) of the ego vehicle, and $H_0$ expresses half of the length (i.e., the first length) of the ego vehicle. $W_1$ expresses half of the width (i.e., the second width) of the obstacle, and $H_1$ expresses half of the length (i.e., the second length) of the obstacle. A dark grey rectangular box region in the middle expresses a region occupied by the ego vehicle. The figure is labeled with sizes configured to express a relation between the boundaries of the current collision region and the region occupied by the ego vehicle. For the vehicle-following and overtaking collision region, as overtaking is to occur to the left of the obstacle, a distance of a right boundary of the current collision region to a right boundary of the region occupied by the ego vehicle is $\frac{W_1}{4}$, and a distance of a front boundary of the current collision region to a front boundary of the region occupied by the ego vehicle is $\frac{H_1}{2}$. The length of the region occupied by the ego vehicle is the first length ($2H_0$), and the width of the region occupied by the ego vehicle is the first width $W_0$.

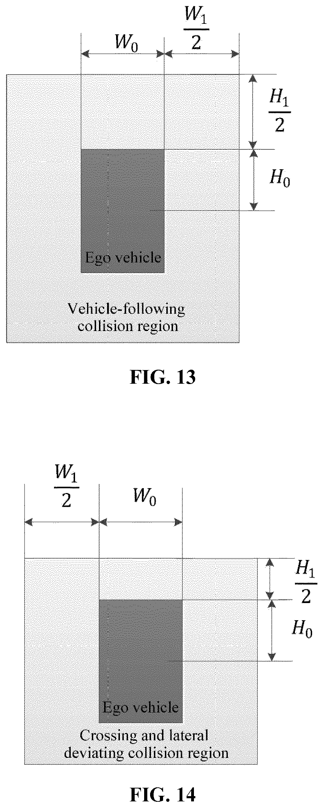

In some optional embodiments, FIG. 13 is a diagram of a vehicle-following collision region according to an illustrative embodiment of this disclosure. As shown in FIG. 13, a current collision region of a vehicle-following collision region type is displayed. For meanings of the symbols, refer to a foregoing embodiment.

In some optional embodiments, FIG. 14 is a diagram of a crossing and lateral deviating collision region according to an illustrative embodiment of this disclosure. As shown in FIG. 14, a diagram of the crossing and lateral deviating collision region is displayed. For meanings of the symbols, refer to a foregoing embodiment.

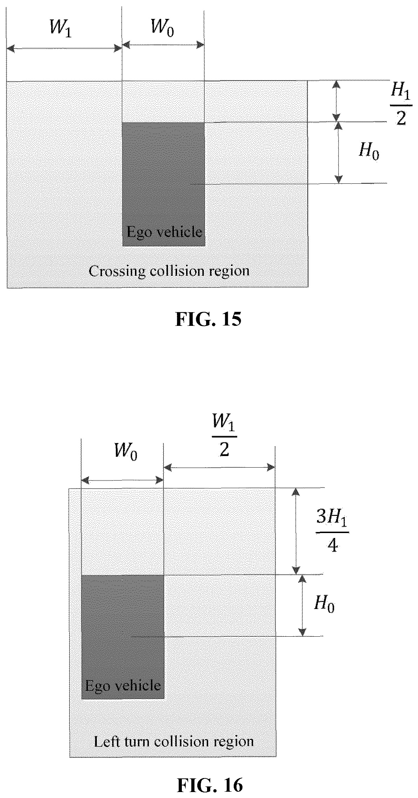

In some optional embodiments, FIG. 15 is a diagram of a crossing collision region according to an illustrative embodiment of this disclosure.

In some optional embodiments, FIG. 16 is a diagram of a left turn collision region according to an illustrative embodiment of this disclosure.

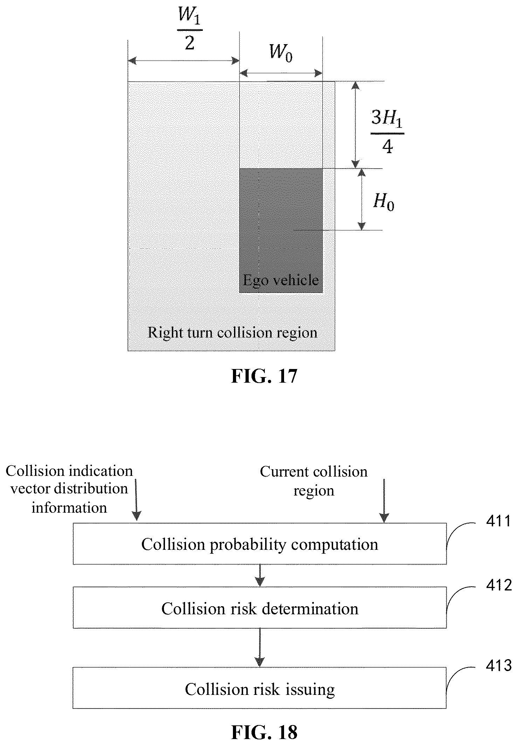

In some optional embodiments, FIG. 17 is a diagram of a right turn collision region according to an illustrative embodiment of this disclosure.

For labels in the diagrams of the collision regions of FIG. 13 to FIG. 17, one may refer to labels shown the foregoing

FIG. 12, which are not elaborated one by one here. It may be seen that distances of boundaries of the different types of collision regions to the geometric center point of the ego vehicle may differ, and for one collision region type, the distances of the boundaries of the current collision region to the geometric center point of the ego vehicle also may differ for obstacles of different sizes, thereby implementing an adaptive collision region combining the scenario type, the size of ego vehicle, and the size of the obstacle, and effectively improving accuracy of the collision risk value.

In some optional embodiments, step 2052 of determining a current collision region according to the current road scenario type may include:

determining a first length and a first width of the vehicle, and a second length and a second width of the obstacle; and determining the current collision region based on the current road scenario type, the first length, the first width, the second length, and the second width.

The first length and the first width of the vehicle and the second length and the second width of the obstacle may be obtained in a mode of determination in a foregoing embodiment. For a specific operation in determining the current collision region combining the current road scenario type, the size of the vehicle, and the size of the obstacle, one may refer to a foregoing embodiment, which is not repeated here.

With this embodiment, the current collision region is determined combining the real-time road scenario type, the size of the ego vehicle, and the size of the obstacle, thereby improving accuracy and effectiveness of the current collision region, and improving accuracy of the collision risk state.

In some optional embodiments, FIG. 18 is a flowchart of collision probability computation and collision risk issuing according to an illustrative embodiment of this disclosure. As shown in FIG. 18, after the current collision region and the collision indication vector distribution information corresponding respectively to the at least one future time point have been obtained, collision risk issuing may be implemented by steps as follows.

Step 411, Computing collision probability, i.e., computing the at least one collision risk value corresponding respectively to the at least one future time point according to the current collision region and the collision indication vector distribution information corresponding respectively to the at least one future time point.

Step 412, Determining Collision risk, i.e., determining whether there is a risk of collision of the vehicle and the obstacle according to the at least one collision risk value corresponding respectively to the at least one future time point as computed by step 411 and the collision risk threshold.

Step 413, Issuing collision risk, i.e., in response to determining that there is a risk of collision of the vehicle and the obstacle, issuing the risk of collision to a control module of the vehicle, to control trigger of the AEB function.

With this embodiment, the collision risk state of the vehicle and the obstacle is determined by computing the at least one collision risk value corresponding respectively to the at least one future time point, for controlling the driving state of the vehicle. As it is a value of the risk probability of collision to be computed, rather than a Boolean variable, it is enabled to further improve tolerance to a perceived noise, thereby improving accuracy of the collision risk state, and improving driving safety of the vehicle.

In some optional embodiments, step 2053 of determining, based on the current collision region and the collision indication vector distribution information at the at least one future time point, at least one collision risk value at the at least one future time point includes:

determining an integral value, of collision indication vector distribution information in the current collision region corresponding to any one future time point, and determining the integral value as a collision risk value corresponding to the future time point.

The collision indication vector distribution information corresponding to the any one future time point represents the relation of spatial position distribution of the obstacle relative to the ego vehicle, i.e., probabilities of the position of the obstacle relative to the ego vehicle being at respective positions within the elliptical region of the collision indication vector distribution. The integral value, in the current collision region, of the collision indication vector distribution information corresponding to the any one future time point refers to, an integral value within an overlap region of the current collision region and an ellipse of the collision indication vector distribution, and may be expressed as follows.

$$P_{collision} = \int_A \overrightarrow{CA} dA$$

Wherein $P_{collision}$ expresses the collision risk value, A expresses the current collision region, and $\overrightarrow{CA}$ expresses the collision indication vector distribution.

A collision risk value corresponding to a future time point may be obtained in a mode of integration as described above. The at least one collision risk value corresponding respectively to the at least one future time point may be expressed by a sequence of collision risk values as follows.

$$P_{collision}^{Total} = [P_{collision_1}, P_{collision_2}, \cdots, P_{collision_N}]$$

Wherein N is the total number of future time points. $P_{collision_j}$ ($j$ = 1, 2, ..., $N$) expresses the collision risk value corresponding to the $j$-th future time point.

With the method according to embodiments of this disclosure, obstacle state information is obtained by fusing and processing obstacle state information perceived by different types of onboard sensors; Gaussian random sampling is performed by combining information on a state of the ego vehicle obtained from a chassis of the ego vehicle, to obtain sampling states distributed normally; further, information on probabilistic distribution of positions of the ego vehicle and the obstacle within a preset duration in the future is computed using a predefined state transition function for variable acceleration; and information on distribution of collision indication vectors pointing from the geometric center point of the ego vehicle toward the geometric center point of the obstacle is computed; meanwhile, a current collision region is determined adaptively combining a result of scenario type identification; a result of integration of a collision indication vector distribution which falls within the current collision region at a future time point is computed, as a collision risk value, and compared to a collision risk threshold; when the collision risk value is greater than the collision risk threshold, it is considered that there is a risk of collision, and that intervention of an AEB system is needed. Probabilistic collision risk determination is implemented, such that the collision risk value for determining the risk of collision is, rather than being a Boolean variable, a probability value that may fall within a range of 0 to 1, thereby greatly improving accuracy and reliability of a collision risk state.

Respective embodiments of this disclosure may be implemented individually, or implemented in a mode of any combination as long as it causes no conflict, specifics of which may be set as needed, and are not limited in this disclosure.

Any one method for controlling a vehicle according to embodiments of this disclosure may be implemented by any appropriate device capable of data processing, including but not limited to a terminal device, a server, etc. Alternatively, any one method for controlling a vehicle according to embodiments of this disclosure may be implemented by a processor. For example, the processor implements the any one method for controlling a vehicle mentioned in embodiments of this disclosure by calling respective instructions stored in a memory, which is not elaborated hereinafter.

Illustrative apparatus

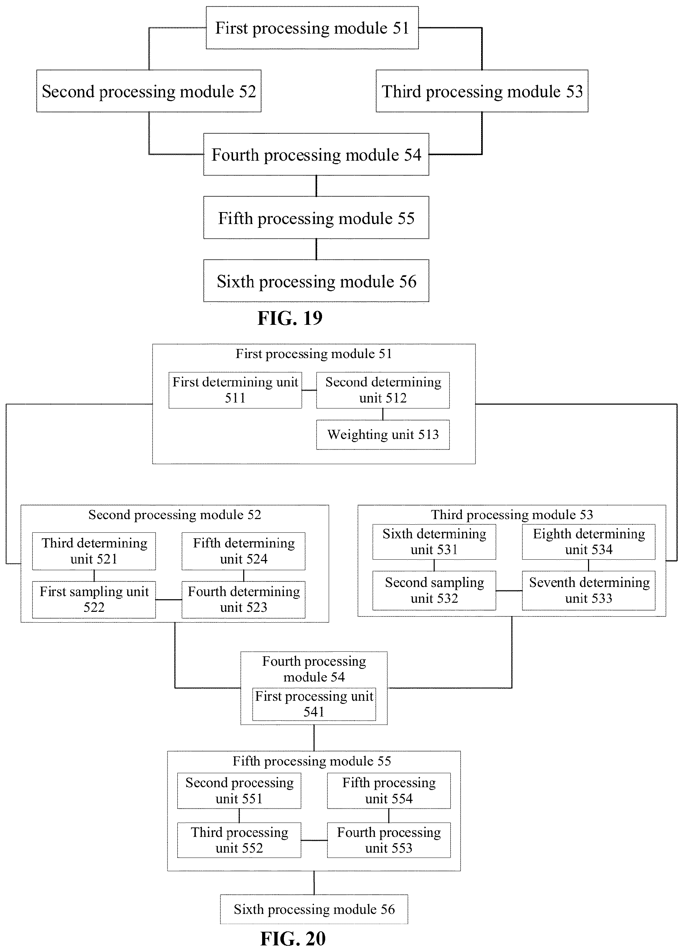

FIG. 19 is a schematic diagram of a structure of an apparatus for controlling a vehicle according to an illustrative embodiment of this disclosure. The apparatus of the embodiment may be configured to implement the respective method embodiments of this disclosure. The apparatus as shown in FIG. 19 may include: a first processing module 51, a second processing module 52, a third processing module 53, a fourth processing module 54, a fifth processing module 55, and a sixth processing module 56.

The first processing module 51 is configured to determine first ego vehicle state information of the vehicle at a current time point and first obstacle state information of an obstacle around the vehicle at the current time point.

The second processing module 52 is configured to determine, based on the first ego vehicle state information, first position probability distribution information of the vehicle at at least one future time point.

The third processing module 53 is configured to determine, based on the first obstacle state information, second position probability distribution information of the obstacle at the at least one future time point.

The fourth processing module 54 is configured to determine, based on the first position probability distribution information and the second position probability distribution information at the at least one future time point, collision indication vector distribution information between the obstacle and the vehicle at the at least one future time point.

The fifth processing module 55 is configured to determine, based on the collision indication vector distribution information at the at least one future time point, a collision risk state of the vehicle and the obstacle.

The sixth processing module 56 is configured to control a driving state of the vehicle based on the collision risk state.

FIG. 20 is a schematic diagram of a structure of an apparatus for controlling a vehicle according to another illustrative embodiment of this disclosure.

In some optional embodiments, based on the embodiment shown in FIG. 19, as shown in FIG. 20, the first processing module 51 may include: a first determining unit 511, a second determining unit 512, and a weighting unit 513.

The first determining unit 511 is configured to determine the first ego vehicle state information of the vehicle at the current time point.

The second determining unit 512 is configured to determine second obstacle state information of the obstacle at the current time point perceived respectively by at least one sensor.

The weighting unit 513 is configured to weight the second obstacle state information corresponding respectively to the at least one sensor based on a credibility weight corresponding respectively to a sensor of respective types pre-obtained, to obtain the first obstacle state information of the obstacle at the current time point.

In some optional embodiments, the credibility weight corresponding respectively to the sensor of the respective types is obtained by: determining an obstacle state ground truth of a preset obstacle and an obstacle state predicted value of the preset obstacle perceived respectively by the sensor of the respective types; and determining the credibility weight corresponding to the sensor of the respective types based on the obstacle state ground truth and the obstacle state predicted value corresponding respectively to the sensor of the respective types.

In some optional embodiments, based on the embodiment shown in FIG. 19, as shown in FIG. 20, the second processing module 52 may include: a third determining unit 521, a first sampling unit 522, a fourth determining unit 523, and a fifth determining unit 524.

The third determining unit 521 is configured to determine a first state mean based on the first ego vehicle state information.

The first sampling unit 522 is configured to determine a plurality of sampling states corresponding to the vehicle based on the first state mean and a first state variance pre-obtained.

The fourth determining unit 523 is configured to determine, based on a vehicle state transition rule pre-obtained and the plurality of sampling states corresponding to the vehicle, first state probability distribution information of the vehicle corresponding to the at least one future time point.

The fifth determining unit 524 is configured to determine, based on the first state probability distribution information, the first position probability distribution information corresponding respectively to the at least one future time point.

In some optional embodiments, based on the embodiment shown in FIG. 19, as shown in FIG. 20, the third processing module 53 may include: a sixth determining unit 531, a second sampling unit 532, a seventh determining unit 533, and an eighth determining unit 534.

The sixth determining unit 531 is configured to determine a second state mean based on the first obstacle state information.

The second sampling unit 532 is configured to determine a plurality of sampling states corresponding to the obstacle based on the second state mean and a second state variance pre-obtained.

The seventh determining unit 533 is configured to determine, based on an obstacle state transition rule pre-obtained and the plurality of sampling states corresponding to the obstacle, second state probability distribution information of the obstacle at the at least one future time point.

The eighth determining unit 534 is configured to determine, based on the second state probability distribution information, the second position probability distribution information of the obstacle at the at least one future time point.

In some optional embodiments, based on the embodiment shown in FIG. 19, as shown in FIG. 20, the fourth processing module 54 may include: a first processing unit 541, configured to superpose first position probability distribution information and second position probability distribution information at any one future time point according to preset coefficients, to obtain collision indication vector distribution information corresponding to the future time point.

In some optional embodiments, based on the embodiment shown in FIG. 19, as shown in FIG. 20, the fifth processing module 55 may include: a second processing unit 551, a third processing unit 552, a fourth processing unit 553, and a fifth processing unit 554.

The second processing unit 551 is configured to determine a current road scenario type based on the first ego vehicle state information and the first obstacle state information.

The third processing unit 552 is configured to determine a current collision region based on the current road scenario type.

The fourth processing unit 553 is configured to determine, based on the current collision region and the collision indication vector distribution information corresponding respectively to the at least one future time point, at least one collision risk value corresponding respectively to the at least one future time point.

The fifth processing unit 554 is configured to determine, based on a collision risk threshold and the at least one collision risk value corresponding respectively to the at least one future time point, the collision risk state between the vehicle and the obstacle.

In some optional embodiments, the second processing unit 551 specifically is configured to: determine a lateral velocity of the obstacle based on the first obstacle state information; determine, based on the first ego vehicle state information, a turning tendency state of the vehicle; and determine the current road scenario type based on the lateral velocity of the obstacle and the turning tendency state of the vehicle.

In some optional embodiments, the third processing unit 552 specifically is configured to: in response to the current road scenario type being a first type, determine a overtaking tendency state of the vehicle; determine the current collision region based on the overtaking tendency state of the vehicle; in response to the current road scenario type being a second type, determine the current collision region based on a longitudinal velocity of the obstacle; and in response to the current road scenario type being a third type, determine the current collision region based on a turning direction of the vehicle.

In some optional embodiments, the third processing unit 552 specifically is configured to: determine the current collision region based on the overtaking tendency state of the vehicle, a first length and a first width of the vehicle, and a second length and a second width of the obstacle.

In some optional embodiments, the third processing unit 552 specifically is configured to: determine the current collision region based on the longitudinal velocity of the obstacle, the first length and the first width of the vehicle, and the second length and the second width of the obstacle.

In some optional embodiments, the third processing unit 552 specifically is configured to: determine the current collision region based on the turning direction of the vehicle, the first length and the first width of the vehicle, and the second length and the second width of the obstacle.

In some optional embodiments, the third processing unit 552 specifically is configured to: determine a first length and a first width of the vehicle, and a second length and a second width of the obstacle; and determine the current collision region based on the current road scenario type, the first length, the first width, the second length, and the second width.

In some optional embodiments, the fourth processing unit 553 specifically is configured to: determine an integral value of collision indication vector distribution information in the current collision region corresponding to any one future time point of the at least one future time point, as a collision risk value corresponding to the future time point.

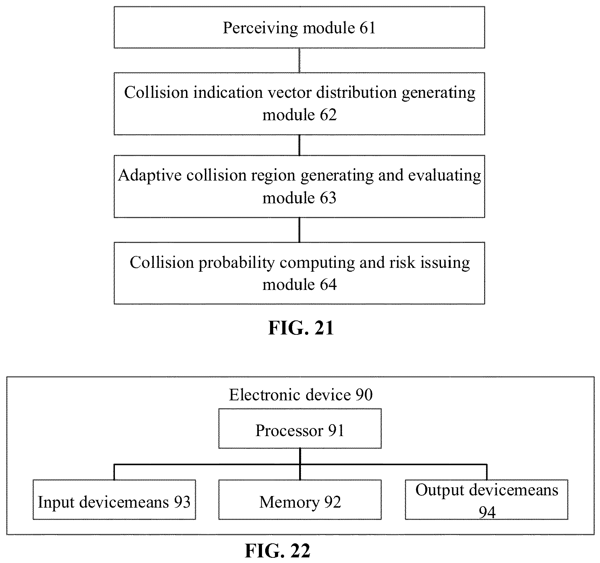

In some optional embodiments, the apparatus according to embodiments of this disclosure is not limited by a module division manner in embodiments described above. For example, FIG. 21 is a schematic diagram of a structure of an apparatus for controlling a vehicle according to yet another illustrative embodiment of this disclosure. The apparatus as shown in FIG. 21 may include: a perceiving module 61, a collision indication vector distribution generating module 62, an adaptive collision region generating and evaluating module 63, and a collision probability computing and risk issuing module 64. The perceiving module 61 (equivalent to the first processing module 51 according to embodiments described above) may be configured to determine first ego vehicle state information of the vehicle at a current time point and first obstacle state information of an obstacle around the vehicle at the current time point. The collision indication vector distribution generating module 62 may be configured to determine, based on the first ego vehicle state information, first position probability distribution information of the vehicle at at least one future time point; determine, based on the first obstacle state information, second position probability distribution information of the obstacle at the at least one future time point; and determine, based on the first position probability distribution information and the second position probability distribution information at the at least one future time point, collision indication vector distribution information of the obstacle and the vehicle at the at least one future time point. That is, the collision indication vector distribution generating module 62 equivalently includes the second processing module 52, the third processing module 53, and the fourth processing module 54 according to embodiments described above. The adaptive collision region generating and evaluating module 63 may be configured to determine a current road scenario type based on the first ego vehicle state information and the first obstacle state information; and determine a current collision region based on the current road scenario type. That is, the adaptive collision region generating and evaluating module 63 equivalently includes the second processing unit 551 and the third processing unit 552 in embodiments described above. The collision probability computing and risk issuing module 64 may be configured to determine, based on the current collision region and the collision indication vector distribution information at the at least one future time point, at least one collision risk value at the at least one future time point; determine, based on a collision risk threshold and the at least one collision risk value at the at least one future time point, the collision risk state of the vehicle and the obstacle; and control a driving state of the vehicle based on the collision risk state. That is, the collision probability computing and risk issuing module 64 equivalently includes the fourth processing unit 553, the fifth processing unit 554, and the sixth processing module 56 in embodiments described above.

For beneficial technical effects corresponding to the illustrative embodiments of this apparatus, one may refer to the respective beneficial technical effects in the "Illustrative method" section described above, which are not repeated here.

Illustrative electronic device

FIG. 22 is a diagram of a structure of an electronic device according to embodiments of this disclosure, where the electronic device 90 includes at least a processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, random access memory (RAM) and/or cache. The nonvolatile memory may include, for example, read-only memory (ROM), hard disk, and flash memory. One or more computer program instructions may be stored on the computer readable storage medium. The processor 91 may execute one or more of the program instructions to implement the method according to the various embodiments of this disclosure that are described above and/or other desired functions.

In an example, the electronic device 90 may further include an input means 93 and an output means 94. These components are connected to each other through a bus system and/or another form of connection mechanism (not shown).

The input means 93 may further include, for example, a keyboard and a mouse.

The output means e 94 may output various information to the outside, and may include, for example, a display, a speaker, a printer, a communication network, and a remote output device connected to the communication network.

Certainly, for simplicity, FIG. 22 shows only some of components in the electronic device 90 that are related to this disclosure, and components such as a bus and an input/output interface are omitted. In addition, according to specific application situations, the electronic device 90 may further include any other appropriate components.

Illustrative computer program product and computer readable storage medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Illustrative method" section of this specification.

The computer program product may include program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Illustrative method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1. A method for controlling a vehicle, **characterized by** comprising:

   determining (201) first ego vehicle state information of the vehicle at a current time point and first obstacle state information of an obstacle around the vehicle at the current time point;
   determining (202), based on the first ego vehicle state information, first position probability distribution information of the vehicle at a future time point;
   determining (203), based on the first obstacle state information, second position probability distribution information of the obstacle at the future time point;
   determining (204), based on the first position probability distribution information and the second position probability distribution information, collision indication vector distribution information between the obstacle and the vehicle at the future time point;
   determining (205), based on the collision indication vector distribution information, a collision risk state between the vehicle and the obstacle; and
   controlling (206) a driving state of the vehicle based on the collision risk state.

2. The method according to claim 1, wherein determining (205), based on the collision indication vector distribution information, the collision risk state between the vehicle and the obstacle comprises:

   determining (2051) a current road scenario type based on the first ego vehicle state information and the first obstacle state information;
   determining (2052) a current collision region based on the current road scenario type;
   determining (2053), based on the current collision region and the collision indication vector distribution information, a collision risk value at the future time point; and
   determining (2054), based on the collision risk value and a collision risk threshold, the collision risk state between the vehicle and the obstacle.

3. The method according to claim 2, wherein the determining (2053), based on the current collision region and the collision indication vector distribution information, a collision risk value at the future time point comprises:
   determining an integral value of collision indication vector distribution information in the current collision region, as the collision risk value corresponding to the future time point.

4. The method according to claim 2, wherein the determining (2051) a current road scenario type based on the first ego vehicle state information and the first obstacle state information comprises:

   determining a lateral velocity of the obstacle based on the first obstacle state information;
   determining, based on the first ego vehicle state information, a turning tendency state of the vehicle; and
   determining the current road scenario type based on the lateral velocity of the obstacle and the turning tendency state of the vehicle.

5. The method according to claim 2, wherein the determining (2052) a current collision region based on the current road scenario type comprises:

   in response to the current road scenario type being a first type, determining an overtaking tendency state of the vehicle;
   determining the current collision region based on the overtaking tendency state of the vehicle;
   in response to the current road scenario type being a second type, determining the current collision region based on a longitudinal velocity of the obstacle; and
   in response to the current road scenario type being a third type, determining the current collision region based on a turning direction of the vehicle.

6. The method according to claim 2 or 5, wherein the determining (2052) a current collision region based on the current road scenario type comprises:

determining a first length and a first width of the vehicle, and a second length and a second width of the obstacle; and

determining the current collision region based on the current road scenario type, the first length, the first width, the second length, and the second width.

7. The method according to claim 1, wherein the determining (204), based on the first position probability distribution information and the second position probability distribution information, collision indication vector distribution information between the obstacle and the vehicle at the future time point comprises:
superposing (2041) first position probability distribution information and second position probability distribution information based on preset coefficients, to obtain collision indication vector distribution information corresponding to the future time point.

8. The method according to any one of claims 1 to 7, wherein the determining (202), based on the first ego vehicle state information, first position probability distribution information of the vehicle at a future time point comprises:

determining (2021) a first state mean based on the first ego vehicle state information;
determining (2022) a plurality of sampling states corresponding to the vehicle based on the first state mean and a first state variance pre-obtained;
determining (2023), based on a vehicle state transition rule pre-obtained and the plurality of sampling states corresponding to the vehicle, first state probability distribution information of the vehicle corresponding to the future time point; and
determining (2024), based on the first state probability distribution information, the first position probability distribution information.

9. The method according to any one of claims 1 to 7, wherein the determining (203), based on the first obstacle state information, second position probability distribution information of the obstacle at the future time point comprises:

determining (2031) a second state mean based on the first obstacle state information;
determining (2032) a plurality of sampling states corresponding to the obstacle based on the second state mean and a second state variance pre-obtained;
determining (2033), based on an obstacle state transition rule pre-obtained and the plurality of sampling states corresponding to the obstacle, second state probability distribution information of the obstacle at the future time point; and
determining (2034), based on the second state probability distribution information, the second position probability distribution information of the obstacle.

10. The method according to any one of claims 1 to 7, wherein the determining (201) the first obstacle state information of the obstacle around the vehicle at the current time point comprises:

determining (2012) second obstacle state information of the obstacle at the current time point perceived respectively by multiple types of sensors; and
weighting (2013) the second obstacle state information based on a credibility weight corresponding to a sensor of respective types pre-obtained, to obtain the first obstacle state information of the obstacle.

11. The method according to claim 10, wherein the credibility weight corresponding to the sensor of the respective types is obtained by:

determining an obstacle state ground truth of a preset obstacle and an obstacle state predicted value of the preset obstacle perceived by the sensor of the respective types; and
determining the credibility weight corresponding to the sensor of the respective types based on the obstacle state ground truth and the obstacle state predicted value corresponding to the sensor of the respective types.

12. An apparatus for controlling a vehicle, **characterized by** comprising:

a first processing module (51), configured to determine first ego vehicle state information of the vehicle at a current time point and first obstacle state information of an obstacle around the vehicle at the current time point;

a second processing module (52), configured to determine, based on the first ego vehicle state information, first position probability distribution information of the vehicle at a future time point;

a third processing module (53), configured to determine, based on the first obstacle state information, second position probability distribution information of the obstacle at the future time point;

a fourth processing module (54), configured to determine, based on the first position probability distribution information and the second position probability distribution information, collision indication vector distribution information between the obstacle and the vehicle at the future time point;

a fifth processing module (55), configured to determine, based on the collision indication vector distribution information, a collision risk state between the vehicle and the obstacle; and

a sixth processing module (56), configured to control a driving state of the vehicle based on the collision risk state.

13. The apparatus according to claim 12, wherein the first processing module (51) comprises:

a first determining unit (511), configured to determine the first ego vehicle state information of the vehicle at the current time point;

a second determining unit (512), configured to determine second obstacle state information of the obstacle at the current time point perceived respectively by multiple types of sensors; and

a weighting unit (513), configured to weight the second obstacle state information based on a credibility weight corresponding to a sensor of respective types pre-obtained, to obtain the first obstacle state information of the obstacle.

14. A computer readable storage medium, **characterized by** storing a computer program, which, when executed by a processor, cause the processor to implement the method according to any one of claims 1-11.

15. An electronic device (90), **characterized by** comprising:

a processor (91); and

a memory (92), configured to store processor-executable instructions,

wherein the processor (91) is configured to read the executable instructions from the memory (92), and execute the instructions to implement the method according to any one of claims 1-11.

Obstacle
future
trajectory
point
probability
distribution
14

Collision
indication vector
distribution 15

Ego vehicle
future trajectory
point probability
distribution 13

Obstacle
12

Ego
vehicle
11

**FIG. 1**

Determining first ego vehicle state information of the vehicle at a current time point and first obstacle state information of an obstacle around the vehicle at the current time point    201

Determining, based on the first ego vehicle state information, first position probability distribution information of the vehicle at a future time point    202

Determining, based on the first obstacle state information, second position probability distribution information of the obstacle at the at least one future time point    203

Determining, based on the first position probability distribution information and the second position probability distribution information corresponding respectively to the at least one future time point, collision indication vector distribution information between the obstacle and the vehicle at the at least one future time point    204

Determining, based on the collision indication vector distribution information, a collision risk state between the vehicle and the obstacle    205

Controlling a driving state of the vehicle based on the collision risk state    206

**FIG. 2**

Determining first ego vehicle state information of the vehicle at a current time point ⟋ 2011

Determining second obstacle state information of the obstacle at the current time point perceived respectively by at least one sensor ⟋ 2012

Weighting the second obstacle state information based on a credibility weight corresponding respectively to a sensor of respective types pre-obtained, to obtain the first obstacle state information of the obstacle at the current time point ⟋ 2013

202

Determining, based on the first ego vehicle state information, first position probability distribution information of the vehicle at a future time point

203

Determining, based on the first obstacle state information, second position probability distribution information of the obstacle at the at least one future time point

204

Determining, based on the first position probability distribution information and the second position probability distribution information corresponding respectively to the at least one future time point, collision indication vector distribution information between the obstacle and the vehicle at the at least one future time point

Determining, based on the collision indication vector distribution information, a collision risk state between the vehicle and the obstacle ⟋ 205

Controlling a driving state of the vehicle based on the collision risk state ⟋ 206

**FIG. 3**

| Onboard camera 31 | Onboard LIDAR 32 | Onboard millimeter-wave radar 33 |

Image data → LIDAR data → Millimeter-wave radar data

301
Synchronizing and coordinate system transforming

302
LIDAR data in camera coordinate system
Millimeter-wave radar data in camera coordinate system

| Obstacle detection and tracking | Obstacle segmentation (3031) | Obstacle detection (3041) |

Obstacle state information in camera coordinate system corresponding to image data

3032
Clustering and locationposition estimation

3042
Position estimation

Obstacle state information in camera coordinate system corresponding to LIDAR data

Obstacle state information in camera coordinate system corresponding to millimeter-wave radar data

305
Information fusing and integrating

First obstacle state information

**FIG. 4**

30

Determining first ego vehicle state information of the vehicle at a current time point and first obstacle state information of an obstacle around the vehicle at the current time point — 201

Determining a first state mean based on the first ego vehicle state information — 2021

Determining a plurality of sampling states corresponding to the vehicle based on the first state mean and a first state variance pre-obtained — 2022

Determining, based on a vehicle state transition rule pre-obtained and the plurality of sampling states corresponding to the vehicle, first state probability distribution information of the vehicle corresponding respectively to the at least one future time point — 2023

Determining, based on the first state probability distribution information, the first position probability distribution information corresponding respectively to the at least one future time point — 2024

Determining, based on the first obstacle state information, second position probability distribution information of the obstacle at the at least one future time point — 203

Determining, based on the first position probability distribution information and the second position probability distribution information corresponding respectively to the at least one future time point, collision indication vector distribution information between the obstacle and the vehicle at the at least one future time point — 204

Determining, based on the collision indication vector distribution information, a collision risk state between the vehicle and the obstacle — 205

Controlling a driving state of the vehicle based on the collision risk state — 206

**FIG. 5**

Determining first ego vehicle state information of the vehicle at a current time point and first obstacle state information of an obstacle around the vehicle at the current time point — 201

Determining, based on the first ego vehicle state information, first position probability distribution information of the vehicle at a future time point — 202

Determining a second state mean based on the first obstacle state information — 2031

Determining a plurality of sampling states corresponding to the obstacle based on the second state mean and a second state variance pre-obtained — 2032

Determining, based on an obstacle state transition rule pre-obtained and the plurality of sampling states corresponding to the obstacle, second state probability distribution information of the obstacle at the at least one future time point — 2033

Determining, based on the second state probability distribution information, the second position probability distribution information of the obstacle at the at least one future time point — 2034

Determining, based on the first position probability distribution information and the second position probability distribution information corresponding respectively to the at least one future time point, collision indication vector distribution information between the obstacle and the vehicle at the at least one future time point — 204

Determining, based on the collision indication vector distribution information, a collision risk state between the vehicle and the obstacle — 205

Controlling a driving state of the vehicle based on the collision risk state — 206

FIG. 6

Determining first ego vehicle state information of the vehicle at a current time point and first obstacle state information of an obstacle around the vehicle at the current time point — 201

Determining, based on the first ego vehicle state information, first position probability distribution information of the vehicle at a future time point — 202

Determining, based on the first obstacle state information, second position probability distribution information of the obstacle at the at least one future time point — 203

Superposing first position probability distribution information and second position probability distribution information corresponding to any one future time point based on preset coefficients, to obtain collision indication vector distribution information corresponding to the future time point — 2041

Determining, based on the collision indication vector distribution information, a collision risk state between the vehicle and the obstacle — 205

Controlling a driving state of the vehicle based on the collision risk state — 206

**FIG. 7**

First ego vehicle state information

Gaussian random sampling initialization — 311

Plurality of sampling states corresponding to ego vehicle

Ego vehicle state transition prediction — 312

First obstacle state information

Gaussian random sampling initialization — 321

Plurality of sampling states corresponding to obstacle

Obstacle state transition prediction — 322

Generating the collision indication vector distribution — 331

Collision indication vector distribution information

**FIG. 8**

Obstacle
future
trajectory
point
probability
distribution
14

Collision
indication vector
distribution 15

Ego vehicle
future trajectory
point probability
distribution 13

Obstacle
12

Ego
vehicle 11

**FIG. 9**

Determining first ego vehicle state information of the vehicle at a current time point and first obstacle state information of an obstacle around the vehicle at the current time point ⟋ 201

Determining, based on the first ego vehicle state information, first position probability distribution information of the vehicle at a future time point ⟋ 202

Determining, based on the first obstacle state information, second position probability distribution information of the obstacle at the at least one future time point ⟋ 203

Determining, based on the first position probability distribution information and the second position probability distribution information corresponding respectively to the at least one future time point, collision indication vector distribution information between the obstacle and the vehicle at the at least one future time point ⟋ 204

Determining a current road scenario type based on the first ego vehicle state information and the first obstacle state information ⟋ 2051

Determining a current collision region based on the current road scenario type ⟋ 2052

Determining, based on the current collision region and the collision indication vector distribution information at the at least one future time point, at least one collision risk value at the at least one future time point ⟋ 2053

Determining, based on a collision risk threshold and the at least one collision risk value corresponding respectively to the at least one future time point, the collision risk state between the vehicle and the obstacle ⟋ 2054

Controlling a driving state of the vehicle based on the collision risk state ⟋ 206

**FIG. 10**

Identifying Scenario type — 401

Vehicle-following scenario — 4021

Crossing scenario — 4031

Turning scenario — 4041

Ego vehicle tends to overtake? — 4022
Y | N

Obstacle has a longitudinal velocity? — 4032
Y | N

Ego vehicle turns left? — 4042
Y | N

Vehicle-following and overtaking collision region — 4023

Crossing and lateral deviating collision region — 4033

Left turn collision region — 4043

Vehicle-following collision region — 4024

Crossing collision region — 4034

Right turn collision region — 4044

Computing the current collision region combining the size of the ego vehicle and the size of the obstacle — 405

## FIG. 11

Front

$W_0$

$\dfrac{W_1}{4}$

$\dfrac{H_1}{2}$

$H_0$

Ego vehicle

Left

Right

Vehicle-following and overtaking collision region

Back

## FIG. 12

**FIG. 13**

**FIG. 14**

**FIG. 15**

**FIG. 16**

**FIG. 17**

**FIG. 18**

First processing module 51

Second processing module 52

Third processing module 53

Fourth processing module 54

Fifth processing module 55

Sixth processing module 56

**FIG. 19**

First processing module 51

First determining unit 511

Second determining unit 512

Weighting unit 513

Second processing module 52

Third determining unit 521

Fifth determining unit 524

First sampling unit 522

Fourth determining unit 523

Third processing module 53

Sixth determining unit 531

Eighth determining unit 534

Second sampling unit 532

Seventh determining unit 533

Fourth processing module 54

First processing unit 541

Fifth processing module 55

Second processing unit 551

Fifth processing unit 554

Third processing unit 552

Fourth processing unit 553

Sixth processing module 56

**FIG. 20**

| Perceiving module 61 |
| --- |

| Collision indication vector distribution generating module 62 |
| --- |

| Adaptive collision region generating and evaluating module 63 |
| --- |

| Collision probability computing and risk issuing module 64 |
| --- |

**FIG. 21**

| Electronic device 90 | | |
| --- | --- | --- |
| | Processor 91 | |
| Input devicemeans 93 | Memory 92 | Output devicemeans 94 |

**FIG. 22**